# EUROPEAN PATENT APPLICATION

(11) **EP 1 379 006 A1**
(43) Date of publication of application: **07.01.2004**
(21) Application number: 03703140.8
(22) Date of filing: 03.02.2003
(51) Int. Cl.: H04B 1/16, H04H 1/00

(54) **ADVERTISEMENT PROGRAM PROVIDING SYSTEM**

(30) Priority: 04.02.2002 JP 2002026284
(71) Applicant: MATSUSHITA ELECTRIC INDUSTRIAL CO., LTD., Kadoma-shi, Osaka 571-8501 (JP)
(72) Inventor: IINO, Daisuke, Chiba 273-0005 (JP); KAGEYAMA, Mitsuhiro, Tachikawa-shi, Tokyo 190-0032 (JP)
(74) Representative: Grünecker, Kinkeldey, Stockmair & Schwanhäusser Anwaltssozietät
(86) International application number: PCT/JP2003/001042
(87) International publication number: WO 2003/067773

(57) **Abstract**

In a data transmission apparatus, a program management table control section generates and manages a program management table which is used for presentation of an advertisement program at a data reception apparatus, where the table is generated from program identification data for identifying program data, program storage area data for designating where the program data is' stored in the data reception apparatus, and program guidance position data for indicating the geographical position of the location guided in the program. In addition, in the data reception apparatus, a program data storage section takes out the program identification data, the program storage area data, and the program guidance position data by using the program management table received from the data transmission apparatus, and stores, in association with the program guidance position data, the program data identified by the program identification data in area designated by the program storage area data.

## Description

### FIELD OF THE INVENTION

The present invention relates 'to an advertisement program presentation system for transmitting and receiving an advertisement program which provides guidance on a specific geographical position by utilizing a transmission path.

### BACKGROUND ART

There is a conventional contrivance as in Japanese Laid-open Patent Publication No. 2000-115724, which is a reception apparatus which acquires information localized to a community with a simple operation.

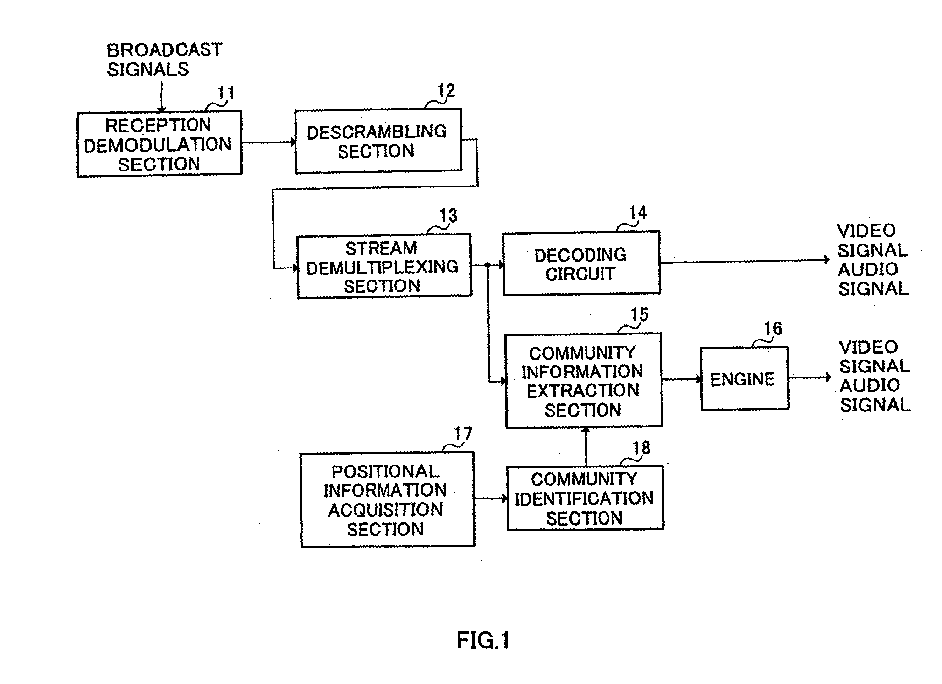

FIG. 1 illustrates one example of a configuration diagram for attaining such a simple acquisition, where advertisement information multiplexed onto a broadcast signal is accompanied with community information. Positional information acquisition section 17 acquires the location of a reception apparatus, and community identification section 18 identifies an area to be extracted based on the acquired positional information. Under control of community identification section 18, community information extraction section 15 extracts advertisement information related to the area where the reception apparatus is located only, and provides the extracted information to Engine 16. This allows an advertisement information screen related to the area to be displayed on a monitor, which further allows a user, without requiring him/her to perform troublesome manipulations, to acquire information closely related to the community with excellent intermediacy.

However, this system as in Japanese Laid-open Patent Publication No. 2001-197329 aims to acquire information which is closely related to a community out of broadcast signals under current reception. That is, in a case where a user uses a reception apparatus while moving geographically, it is not possible to present advertisement information which provides a specific positional guidance on the community when s/he is located in an area where broadcast signals are not able to be received.

As one solution to deal with such a problem, there is a conceivable method in which a data reception apparatus for receiving advertisement information stores received advertisement information, however, there are the following challenges needed to be addressed in storing the advertisement information.

The first item needed to be addressed is where to store advertisement information received by a data reception apparatus. It is necessary to decide the storage place for the advertisement information so that the stored information should not be deleted or overwritten. The second item needed to be addressed is how a data reception apparatus should manage stored advertisement information. It is necessary to construct a database which allows easy retrieval of the stored advertisement information based on positional information. The third item needed to be addressed is the limited memory capacity of a storage device held by a data reception apparatus. As the storing of advertisement information continues, a situation might occur where all available free capacity of the storage device is used up, and so it is not possible to store any more advertisement information which could be demanded by its user.

### DESCRIPTION OF THE INVENTION

The object of the present invention is to provide an advertisement program presentation system which enables the easy storage of advertisement programs transmitted using a transmission path at data reception side, the management of the advertisement programs in order to retrieve a suitable advertisement program(s) out of the stored advertisement programs easily, and further, the storage of the programs which have a greater necessity for a user with reliability.

To achieve the above object, according to the present invention, in a situation where received advertisement program data is not able to be stored because there is not enough free space for storing the received advertisement program data, a determination is rendered to delete advertisement program data out of the stored advertisement program data based on positional data corresponding to the stored advertisement program data.

### BRIEF DESCRIPTION OF THE DRAWINGS

FIG. 1 is a configuration diagram of a data reception apparatus according to Japanese Laid-open Patent Publication No. 2000-115724;
FIG. 2 is a configuration diagram of an advertisement program presentation system according to Embodiment 1 of the present invention;
FIG. 3 is an explanatory diagram of digital broadcast signals transmitted by a data transmission apparatus of an advertisement program presentation system according to Embodiment 1 of the present invention;
FIG. 4 is an explanatory diagram of a program management table which is stored by storage medium 108 and the concept of program data storing by a data reception apparatus of an advertisement program presentation system according to Embodiment 1 of the present invention;
FIG. 5 is an explanatory diagram of the display start timing and stop timing for the advertisement program in a data reception apparatus of an advertisement program presentation system according to Embodiment 1 of the present invention;
FIG. 6 is a flowchart of advertisement program storage procedures in a data reception apparatus of an advertisement program presentation system according to Embodiment 1 of the present invention;
FIG. 7 is a flowchart of advertisement program presentation procedures in a data reception apparatus of an advertisement program presentation system according to Embodiment 1 of the present invention;
FIG. 8 is a configuration diagram of a data reception apparatus of an advertisement program presentation system according to Embodiment 2 of the present invention;
FIG. 9 is an explanatory diagram of a digital broadcast signal transmitted by a data transmission apparatus of an advertisement program presentation system according to Embodiment 2 of the present invention;
FIG. 10 is an explanatory diagram of a program management table which is stored by storage medium 704 and the concept of program data storing by a data reception apparatus of an advertisement program presentation system according to Embodiment 2 of the present invention;
FIG. 11 is an explanatory diagram showing positional relationships between the geographical position guided by a stored advertisement program and the current position of a user;
FIG. 12 is an explanatory diagram of a program management table sorted by program guidance position name list presentation section 808 in the order of closeness to the current position;
FIG. 13 is a configuration diagram of a data reception apparatus of an advertisement program presentation system according to Embodiment 3 of the present invention;
FIG. 14 is an explanatory diagram of an icon management table which is held by program guidance position icon display section 1208;
FIG. 15 is an explanatory diagram of map data, a program guidance position icon, and program data displayed on display device 1211;
FIG. 16 is a flowchart of the procedures for presentation of map data and a program guidance position icon in a data reception apparatus of an advertisement program presentation system according to Embodiment 3 of the present invention;
FIG. 17 is a configuration diagram of a data reception apparatus of an advertisement program presentation system according to Embodiment 4 of the present invention;
FIG. 18 is an explanatory diagram of received program data which is to be stored now by program data storage section 1603, program data stored already, and free space on storage medium 1604;
FIG. 19 is an explanatory diagram of positional relationships between the position guided by program data which is to be stored now by program data storage section 1603, the position guided by program data stored already, and the set position held by setting position holding section 1609;
FIG. 20 is the processing flowchart of program data storage section 1603;
FIG. 21 is a position setting table managed by setting position holding section 1609;
FIG. 22 is an explanatory diagram of positional relationships between the position guided by program data which is to be stored now by program data storage section 1603, the position guided by program data stored already, and a plurality of the set positions held by setting position holding section 1609;
FIG. 23 is the processing flowchart of program data storage section 1603;
FIG. 24 is a configuration diagram of a data reception apparatus of an advertisement program presentation system according to Embodiment 5 of the present invention;
FIG. 25 is a table managed by position setting section 2409, where the table indicates the originating point and the terminating point of the set route;
FIG. 26 is a route table managed by route holding section 2412, where the table indicates a route which encompasses the midpoints from the originating point through the terminating point of the set route, which is calculated by route search section 2410;
FIG. 27 is an illustration representing the originating point, midpoints, and the terminating point on a route table managed by route holding section 2412 as a route on map data;
FIG. 28 is the processing flowchart of program data storage section 2403;
FIG. 29 is an explanatory diagram in which positional relationships between the position guided by program data which is to be stored now by program data storage section 2403, the position guided by program data stored already, and the route held by route holding section 2412 are mapped on map data;
FIG. 30 is an explanatory diagram illustrating the positional relationships between program position data and a route;
FIG. 31 is a configuration diagram of a data reception apparatus of an advertisement program presentation system according to Embodiment 6 of the present invention;
FIG. 32 is an illustration showing the history information of the route on which route history collection section 3108 moves;
FIG. 33 is a ranking table generated by route history collection section 3108, where the table shows how often routes are used; and
FIG. 34 is a ranking table generated by route history collection section 3108, where the table shows how often routes are used.

### BEST MODE FOR CARRYING OUT THE INVENTION

Embodiments of the present invention will be described below with reference to the accompanying drawings. Incidentally, the present invention is in no case limited to these embodiments; the present invention is able to be exploited in various kinds of modes within the range where the gist of the present invention is maintained. Hereafter, an explanation is given with examples which assume that digital broadcast is employed as a transmission path, however such examples do not limit the scope of the present invention to such a form, but the present invention is able to be exploited on various modes of transmission paths, including without limitation, a wired network transmission path as used in cable television broadcasting or public switched telephone network, or wireless network transmission path as used in mobile phones and so forth.

### (Embodiment 1)

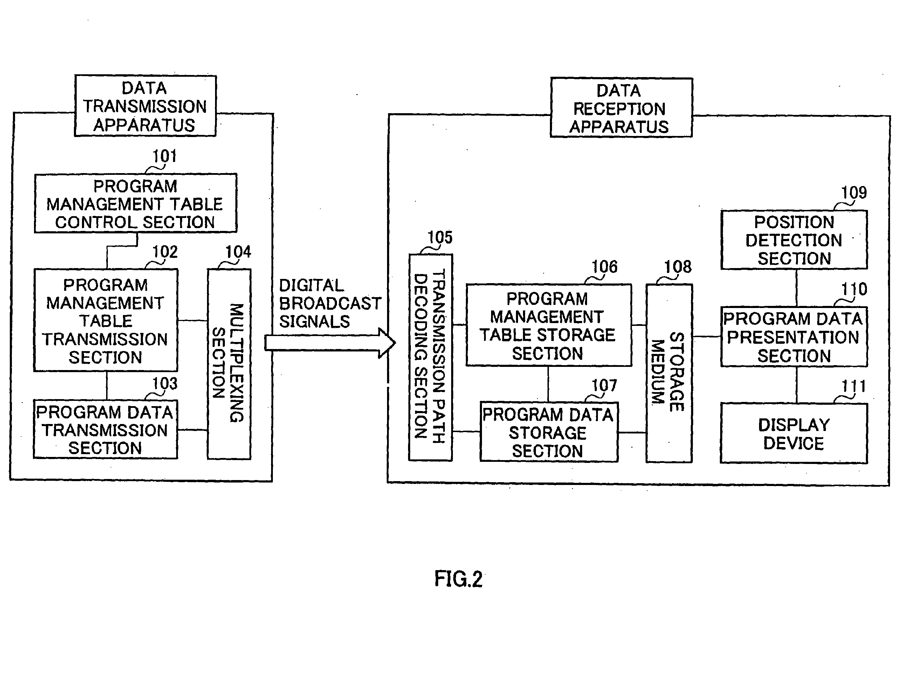

FIG. 2 is a diagram illustrating one example of the configuration of an advertisement program reception apparatus according to the present invention. In FIG. 2, section 101 is a program management table control section that generates and manages a program management table which is used for presentation of an advertisement program at a data reception apparatus, where the table is generated from program identification data for identifying program data, program storage area data for designating where the program data is stored in the data reception apparatus which receives data from a data transmission apparatus, and program guidance position data for indicating the geographical position of the location guided in the program. Section 102 is a program management table transmission section for transmitting the program management table. Section 103 is a program data transmission section for transmitting the program data. Section 104 is a multiplexing section that multiplexes the program management table transmitted by section 102 onto the program data transmitted by section 103, and transmits the multiplexed data as digital broadcast signals to the data reception apparatus. Section 105 is a transmission path decoding section that de-multiplexes the program management tables and the program data out of the broadcast signals and decodes the de-multiplexed tables and data. Section 106 is a program management table storage section for storing the list of the received program management tables. Section 107 is a program data storage section that takes out the program identification data, the program storage area data, and the program guidance position data by using the program management table, and stores, in association with the program guidance position data, the program data identified by the program identification data in area designated by the program storage area data. Section 108 is a storage medium in which the program management table and the program data are stored. Section 109 is a position detection section that is able to obtain current position data which indicates the current position of the data reception apparatus by utilizing GPS signals which are transmitted by the Global Positioning System (GPS). Section 110 is a program data presentation section that presents a retrieved program data, where retrieval of a program data which is the closest to the current position is carried out by comparing the current position data with the program guidance position data in the program management table. Section 111 is a display device for presenting the program data to a user.

Incidentally, in the data reception apparatus of the advertisement program presentation system according to the present embodiment, the program data presentation section 110 has a function to calculate the distance between the current position and the geographical position guided in the program based on the current position data and the program guidance position data and to start presentation of the advertisement program appropriate to the location at the time when the current position moves geographically closer to the extent that the calculated distance becomes shorter than a predetermined set distance, and a function to stop the presentation of the advertisement program at the time when the current position moves geographically farther to the extent that the calculated distance becomes longer than a predetermined set distance.

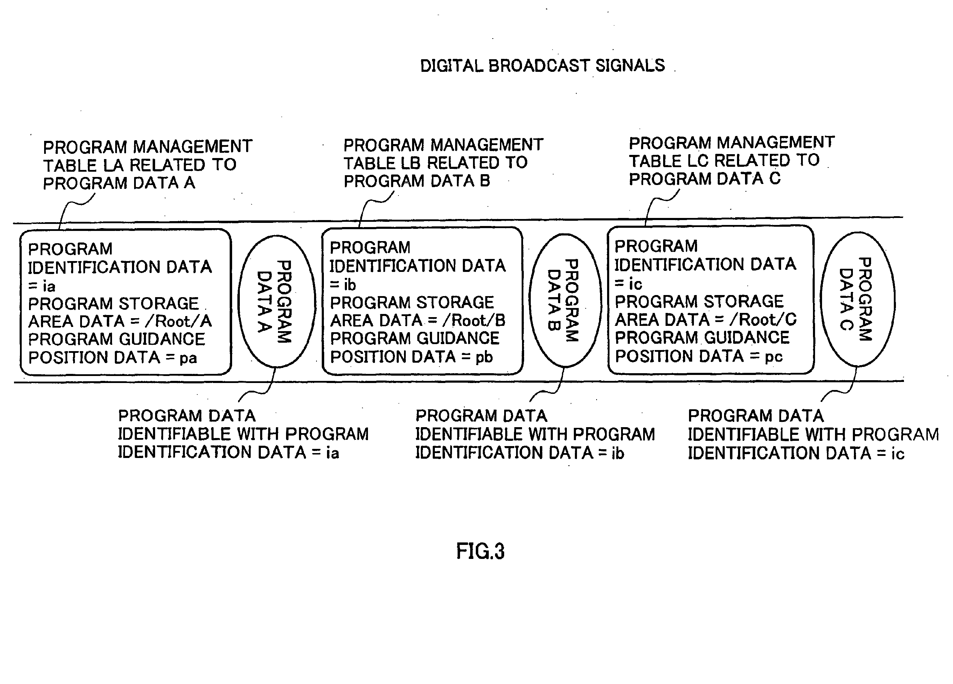

FIG. 3 is a diagram illustrating one example of program data and program management tables of an advertisement program which is transmitted as broadcast signals by a data transmission apparatus of an advertisement program presentation system according to the present invention. Each of program data A, B, and C is an advertisement program which provides guidance on a geographical position shown with program guidance position data *pa, pb,* and *pc,* respectively, whilst each of a program management tables LA, LB, and LC is a program management table related to the program data A, B, and C, respectively.

In FIG. 3, each of the program management tables LA, LB, and LC respectively contains program identification data *ia, ib*, and *ic*, which enables identification of each program data A, B, and C in broadcast signals, program guidance position data *pa, pb*, and *pc,* which respectively indicates the geographical position guided in each program data A, B, and C, and program storage area data *sa, sb,* and *sc*, which respectively designates the area where each program data A, B, and C is stored in the data reception apparatus. Incidentally, an explanation given hereafter assumes that the program guidance position data indicates latitudes and longitudes, whilst the program storage area data indicates directories in storage medium 108.

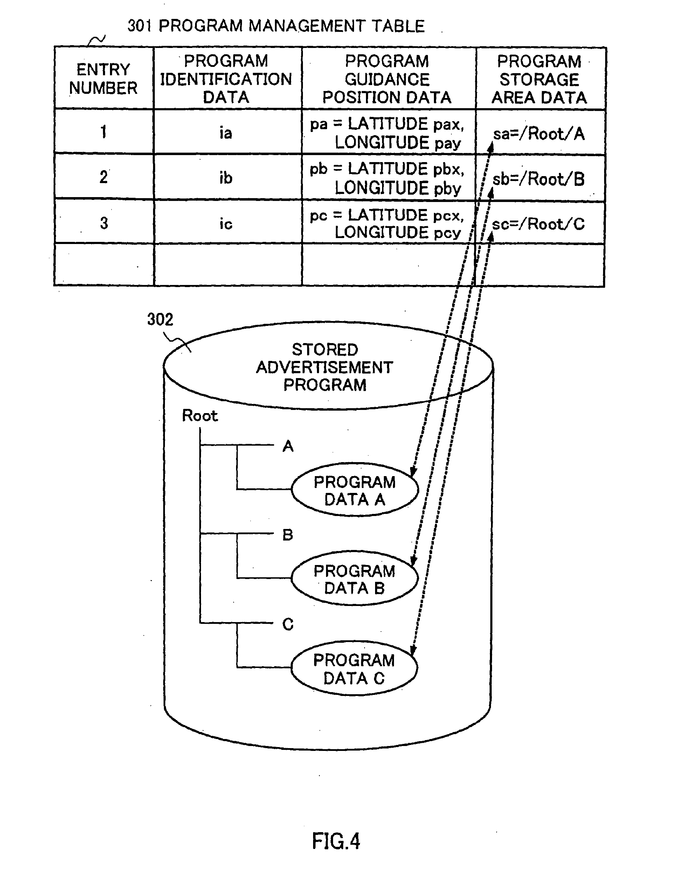

Section 301 in FIG. 4 illustrates one example of a program management table stored by program management table storage section 106 into storage medium 108. Section 302 in FIG. 4 illustrates the storing concept of program data stored by program data storage section 107 into storage medium 108.

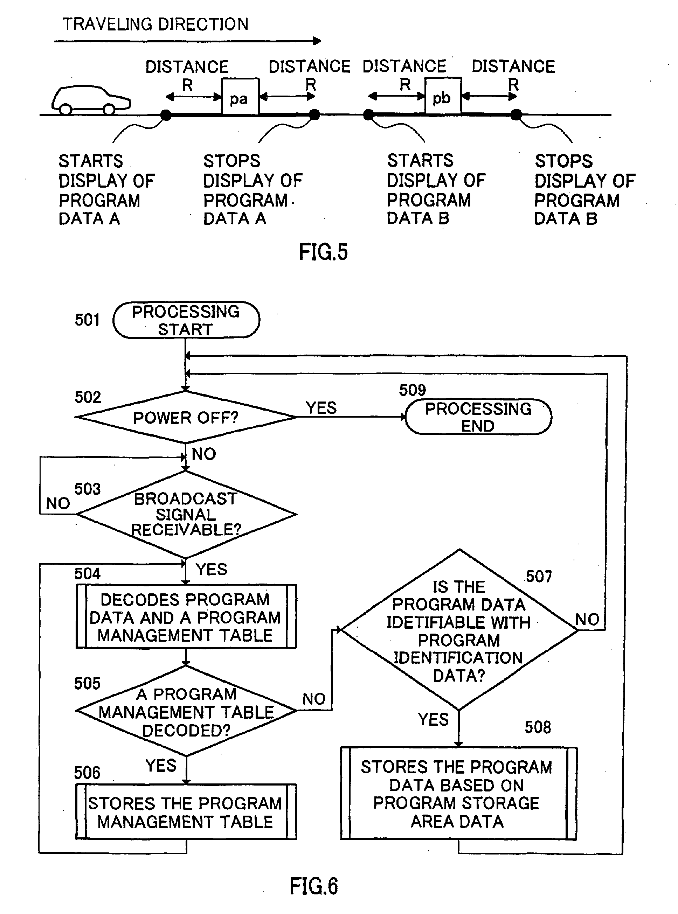

FIG. 5 is a diagram illustrating the example of display start timing and stop timing for displaying program data A and program data B on display device 111 in the case where a vehicle which has a data reception apparatus of an advertisement program presentation system according to the present invention on board moves in the direction of the position indicated by program guidance position data *pa* of entry number 1 in program management table 301 in FIG. 4, passes through that position, and further moves in the direction of the position indicated by program guidance position data *pb* of entry number 2 in the table.

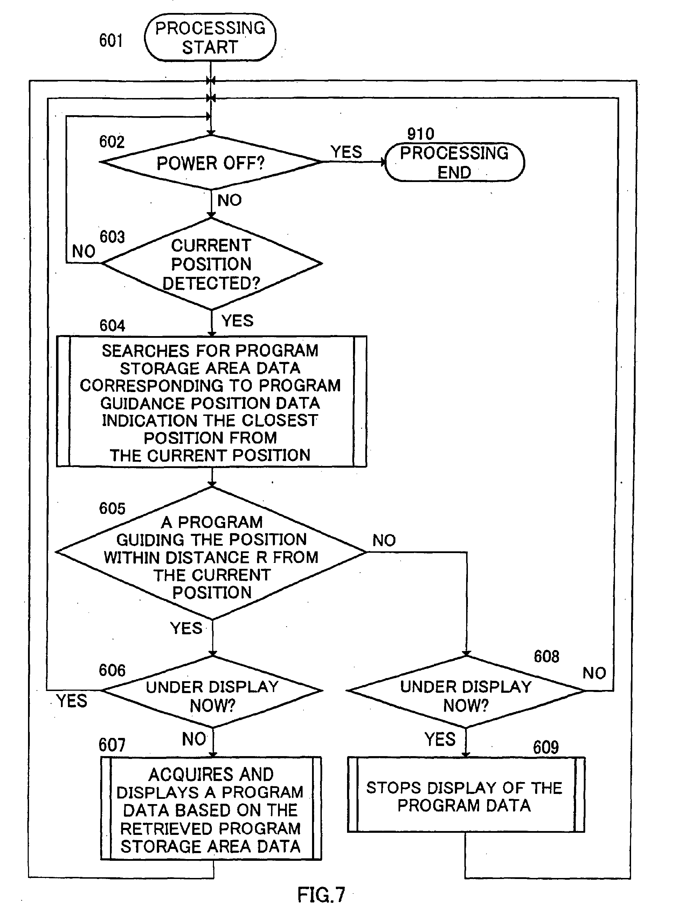

FIG. 6 is a flowchart illustrating the processing flow of advertisement program storage which is performed by sections 105 - 108 of a data reception apparatus in an advertisement program presentation system according to the present invention, and its operation is described below while referring to FIG. 2, FIG. 3, and FIG. 4, too.

Step 1-1) Processing Start (501 in FIG. 6)

Step 1-2) Processing in steps 1-3) and thereafter are executed until power-off. Upon power-off, processing in step 1-9) is executed (502 in FIG. 6).

Step 1-3) Transmission path decoding section 105 is in a standby status until digital broadcast signals are received. Upon reception of digital broadcast signals, processing in steps 1-4) and thereafter are executed (503 in FIG. 6).

Step 1-4) Transmission path decoding section 105 de-multiplexes a program and program-related information out of the signals and decodes them (504 in FIG. 6).

In the case of digital broadcast signals in FIG. 3, program management table LA, program data A, program management table LB, program data B, program management table LC, and program data C are decoded in this order.

Step 1-5) Transmission path decoding section 105 checks which of the program management table or the program data is decoded in step 1-4), and processing in step 1-6) is executed in a case where the program management table is decoded in that step. In a case where the program data is decoded, processing in step 1-7) is executed (505 in FIG. 6) .

Step 1-6) Program management table storage section 106 stores the program management table in storage medium 108, and executes processing in step 1-4) (506 in FIG. 6).

Step 1-7) Program data storage section 107 checks whether the decoded program data is program data which is identified by program identification data in the program management table or not. In a case where the decoded data is program data identified by the program identification data, processing in step 1-8) is executed. In a case where the decoded data is not program data identified by the program identification data, processing in step 1-2) is executed (507 in FIG. 6).

Step 1-8) Program data storage section 107 stores the program data identified in step 1-7) into a directory of storage medium 108 which is designated by program storage area data in the program management table (508 in FIG. 6).

### Step 1-9) Processing End (509 in FIG. 6)

Through the above processing, upon reception of broadcast signals shown in FIG. 3, a data reception apparatus stores program management table 301 shown in FIG. 4, which is received from a data transmission apparatus, and further stores program data in a directory designated by program storage area data in the program management table as illustrated with reference numeral 302.

Incidentally, there is an anticipated case where an advertisement program which provides guidance on the same position has already been stored at the time of storing a new advertisement program. In such a case, it follows that the program management tables having the same program guidance positions exist on storage medium 108. Program data storage section 107 may perform update processing of an advertisement program which provides guidance on the same position, where such updating is done by deletion of program data stored in the directory indicated by program storage area data in an already-stored program management table and by addition of a newly-received program management table, which is performed by program management table storage section 106, and by storing of a newly-received program data. FIG. 7 is a flowchart illustrating the processing flow of advertisement program presentation which is performed by sections 109 - 111 of a data reception apparatus in an advertisement program presentation system according to the present invention, and its operation is described below while referring to FIG. 4 and FIG . 5, too.

### Step 2-1) Processing Start (601 in FIG. 7)

Step 2-2) Processing in steps 2-3) and thereafter are executed until power-off. Upon power-off, processing in step 2-9) is executed (602 in FIG. 7).

Step 2-3) Upon detection of current position data by position detection section 109, processing in steps 2-4) and thereafter are executed (603 in FIG. 7).

Step 2-4) Program data presentation section 110 searches through a program management table for retrieving an entry of program data which provides guidance on the closest position from the current position based on the position indicated by the current position data detected in step 2-3) and program guidance position data of each entry in the program management table (604 in FIG. 7).

Step 2-5) Program data presentation section 110 calculates the distance between the position indicated by the program guidance position data of the entry retrieved in step 2-4) and the position indicated by the current position data, and compares the calculated distance with' set distance R, which is pre-held by program data presentation section 110. In a case where the calculated distance is shorter than the set distance R, step 2-6) is executed. In a case where the calculated distance is longer than the set distance, step 2-7) is executed (605 in FIG. 7) .

Step 2-6) Program data presentation section 110 checks whether program data stored in the area designated by program storage area data of the entry retrieved in step 2-4) is now in display or not (606 in FIG. 7), and if not in display now, the section 110 acquires the program data from storage medium 108 to start display (607 in FIG. 7).

Step 2-7) Program data presentation section 110 checks whether program data stored in the area designated by program storage area data of the entry retrieved in step 2-4) is now in display or not (608 in FIG. 7), and if in display now, the section 110 stops display (609 in FIG. 7).

### Step 2-9) Processing End (610 in FIG. 7)

Through the above processing, in a case where a vehicle which has a data reception apparatus on board, where the apparatus holds a program management table and advertisement programs A, B, and C, moves in the direction of position *pa* illustrated in FIG. 5, the display of program data A, which provides guidance on the position pa, is started at the timing in which the vehicle moving closer to the position reaches the point distanced from the position *pa* by R, and conversely, the display of the program data A is stopped at the timing in which the vehicle moving farther from the position reaches the point distanced from the position *pa* by R.

As described above, according to an advertisement program presentation system of the present embodiment, because a data transmission apparatus generates and manages a program management table which is used for presentation of an advertisement program at data reception side, where the table contains program storage area data for designating where the advertisement program is stored and program guidance position data of the location guided in the program, and the table is transmitted to the data reception side, there is an advantageous effect in that a data reception apparatus is, in accordance with the program management table, able to store the advertisement program easily and to manage the advertisement program easily by associating the program with the program guidance position data.

In addition, there is another advantageous effect in that the data reception apparatus is able to present a suitable advertisement program in accordance with the current position of a user, where such presentation is done by searching for the storage area of a program data which provides guidance on the position which is the closest to the current position, acquiring the program data out of the searched storage area, and displaying the acquired program data.

Moreover, there is still another advantageous effect in that it is possible to present an advertisement program with an appealing effect to a user, 'which is attained by providing a function to control the start timing and stop timing for the display of advertisement program in accordance with the positional relationships between the current user position and the position guided in the advertisement program, and thereby it is possible, for example, to start the display of an advertisement program for a certain store at the time when a user approaches the store leaving a distance of 10m or less and to stop the display of the advertisement program for the store at the time when the user moves away from the store leaving a distance of 10m or more, and so forth.

### (Embodiment 2)

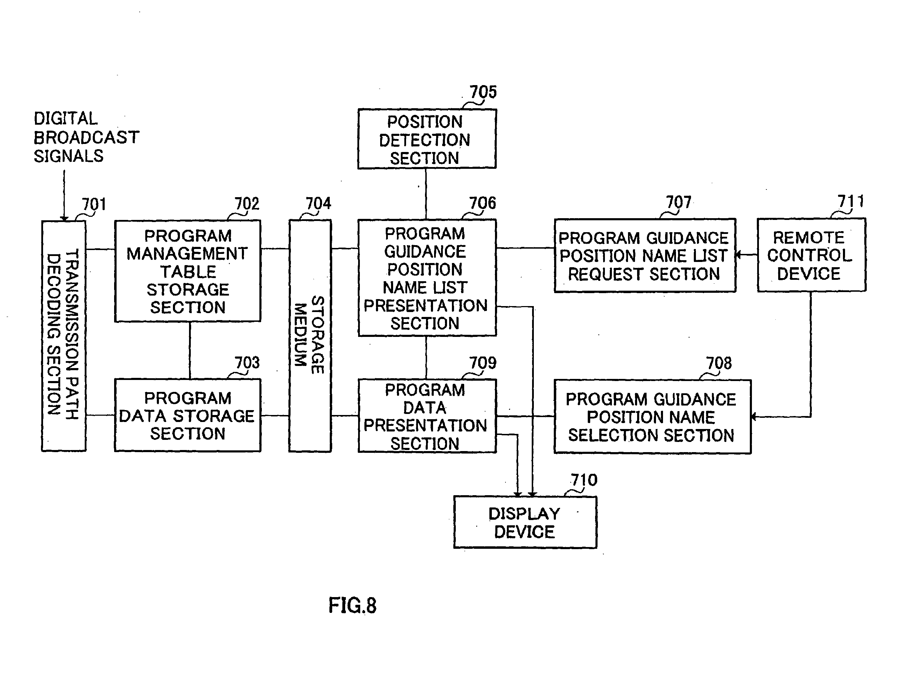

FIG. 8 is a diagram illustrating one example of the configuration of a data reception apparatus in an advertisement program presentation system according to the present invention. In FIG. 8, section 701 is a transmission path decoding section that de-multiplexes program management tables and program data out of broadcast signals and decodes the de-multiplexed tables and data. Section 702 is a program management table storage section for storing the list of the received program management tables. Section 703 is a program data storage section that takes out the program identification data, the program storage area data, and the program guidance position data by using the program management table, and stores, in association with the program guidance position data, the program data identified by the program identification data in area designated by the program storage area data. Section 704 is a storage medium in which the program management table and the program data are stored. Section 705 is a position detection section that is able to obtain current position data which indicates the current position of the data reception apparatus by utilizing GPS signals which are transmitted by the Global Positioning System (GPS). Section 706 is a program guidance position name list presentation section that arranges and presents the list of the program guidance position name data, where such arrangement is made in the order of location based on the current position data and the program guidance position data in the stored program management table. Section 707 is a program guidance position name list request section that accepts the request for the display of the program guidance position name list through user manipulation. Section 708 is a program guidance position name selection section that accepts the selection of the program guidance position name data out of the list of the program guidance position name data which is arranged and presented as above through user manipulation. Section 709 is a program data presentation section that presents program data corresponding to the selected program guidance position name data. Section 710 is a display device for presenting the list of program guidance position names or an advertisement program to a user. Section 711 is a remote control device that enables the user to perform manipulation for requesting the display of the program guidance position name list or for selecting the program guidance position name data.

In this embodiment, it is assumed that program management table control section 101 of a data transmission apparatus in an advertisement program presentation system in FIG. 2 generates and manages a program management table which further contains program guidance position name data for indicating the name of the location guided in the program, and it is further assumed that program management table transmission section 102 transmits the table to a data reception apparatus specified in the present embodiment.

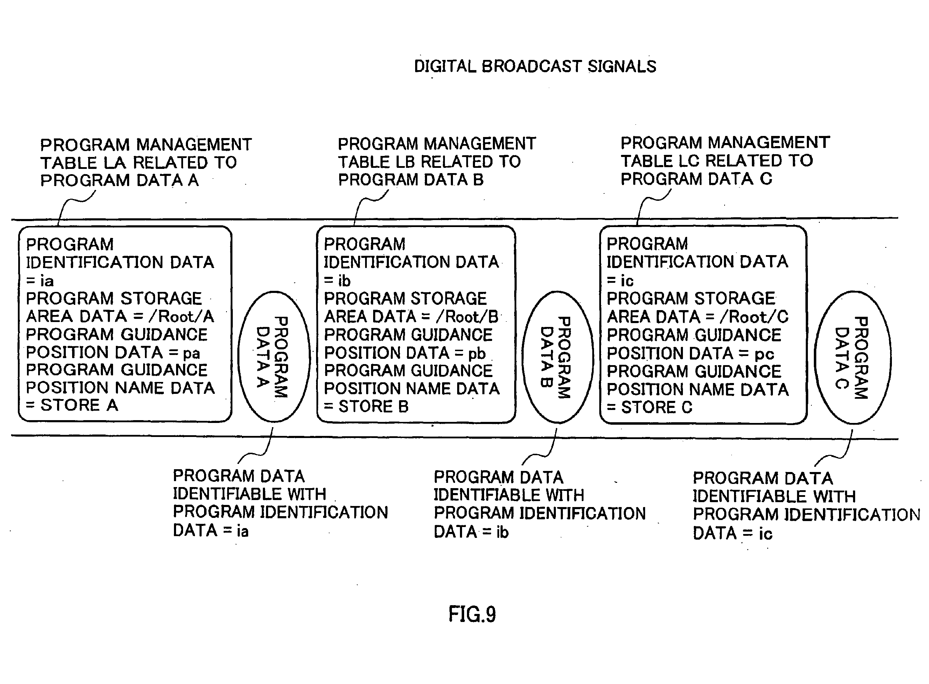

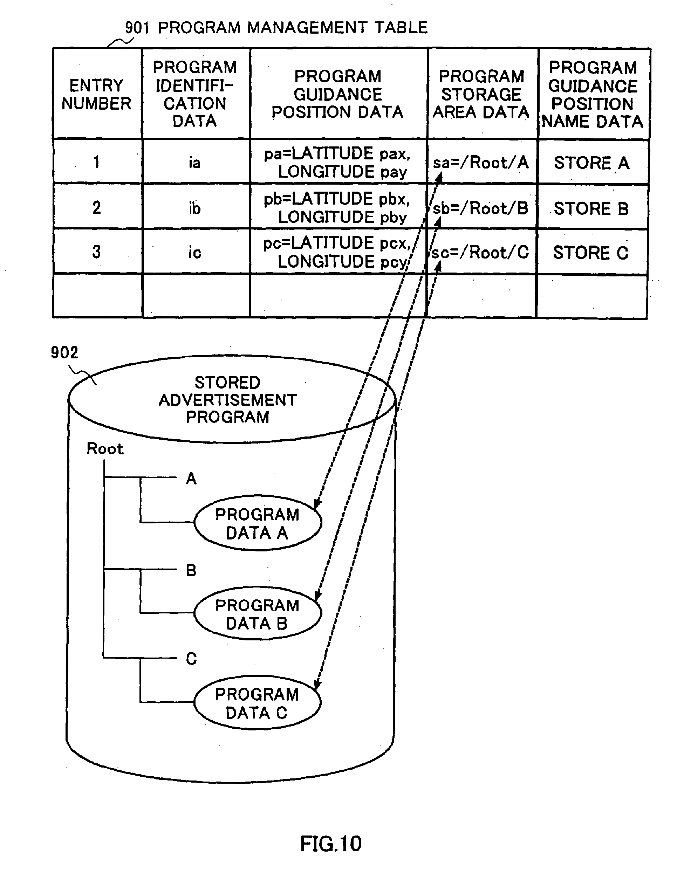

FIG. 9 is a diagram illustrating one example of digital broadcast signals received by the data reception apparatus specified in the present embodiment, and the difference of this figure with FIG. 3 lies only in that each program management table in this figure further contains program guidance position name data for indicating the names of the locations guided in the program: "store A", "store B", and "store C". Section 901 in FIG. 10 illustrates one example of a program management table stored by program management table storage section 702 into storage medium 704. Section 902 in FIG. 10 illustrates the storing concept of program data stored by program data storage section 703 into storage medium 704.

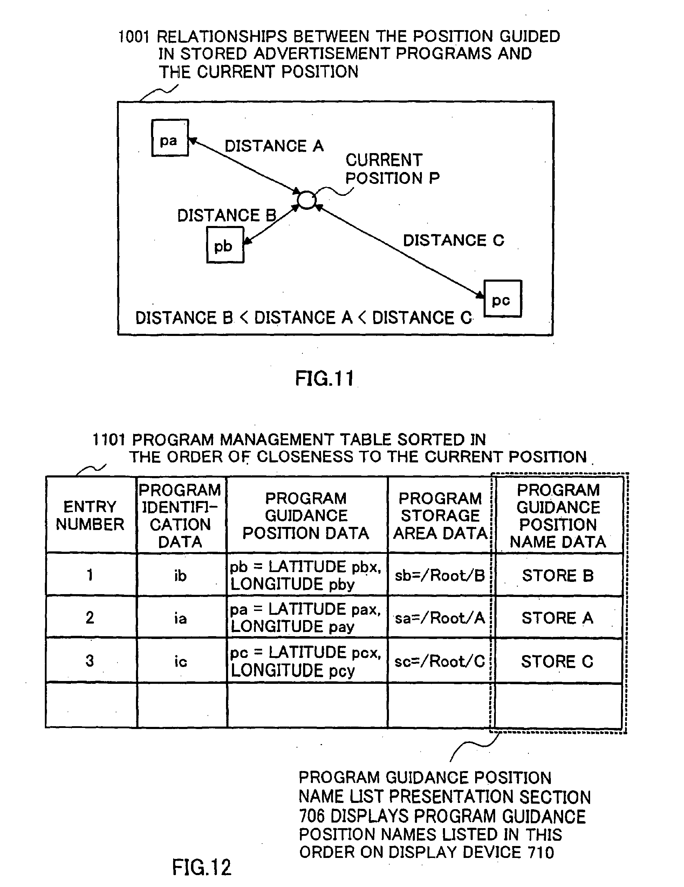

FIG. 11 is a diagram illustrating the positional relationships between current user position P and geographical positions *pa, pb*, and *pc* guided by stored program data A, B, and C, and the figure shows that position *pb* is the closest to the current position P whilst the position *pc* is the farthest from the current position P.

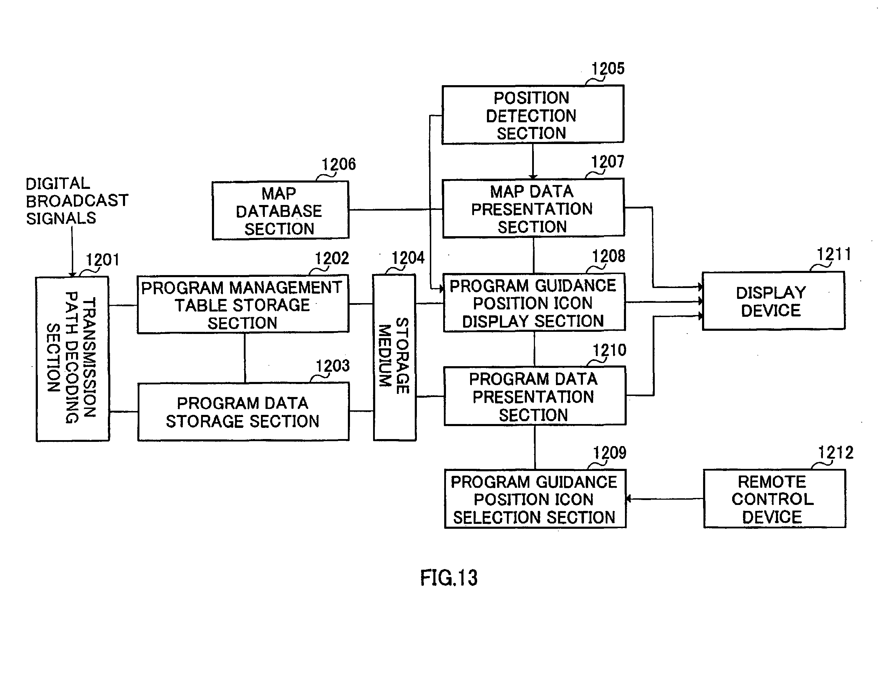

Reference numeral 1101 in FIG. 12 is a sorted table, where such sorting is made in such a way that each entry of program management table 801 is rearranged in the order of closeness to the current position P.

There is no difference in the processing flow of advertisement program storage performed by sections 701 - 704 in FIG. 8 from the processing flow illustrated in FIG. 6 and explained in Embodiment 1, and therefore, its explanation is omitted here.

The processing flow from the issuance of a request for display of a program guidance position name list by a user through actual display of the list on display device 710 is described below.

Step 3-1) Upon issuance of a request for display of a program guidance position name list by a user through manipulation of remote control device 711, program guidance position name list request section 707 accepts the request from the user.

Step 3-2) Program guidance position name list presentation section 706 rearranges each entry in a program management table in the order of closeness of the position indicated by its program guidance position name data to the current position detected by position detection section, and displays the sorted table on display device 710.

Through the above processing, as illustrated with reference numeral 1101 in FIG. 12, the list of the program guidance position name data is displayed on display device 710 rearranged in the order of closeness to the current position, that is, in the order of store B, store A, and lastly, store C.

Next, the processing flow from the selection of any one of the program guidance position data out of the list of the program guidance position names by the user through actual display of the corresponding program data on display device 710 is described below.

Step 4-1) Upon issuance of a request for selection of any one program guidance position name out of the list of program guidance position names by a user through manipulation of remote control device 711, program guidance position name selection section 708 accepts the manipulation for selection from the user.

Step 4-2) From storage medium 704, program data presentation section 709 acquires program data stored in the area designated by program storage area data which corresponds to the selected program guidance position name data, and displays the acquired program data.

In the example of FIG. 12, when a user selects store B, display device 710 displays program data B, which is an advertisement program for the store B, which is located at position *ib*.

As described above, according to a data reception apparatus in an advertisement program presentation system of the present embodiment, program guidance position name list presentation section presents a list of program guidance position name data sorted in the order of closeness to the current position of a user, which produces an advantageous effect in that the user is able to find a suitable advertisement program easily in accordance with 'the current position. Moreover, it produces further effect in that the selection of any one from the list of this program guidance position name data provides the user with a quick viewing access to the advertisement program which provides guidance on the position indicated by the program guidance position name data.

### (Embodiment 3)

FIG. 13 is a diagram illustrating one example of the configuration of a data reception apparatus in an advertisement program presentation system according to the present invention. In FIG. 13, section 1201 is a transmission path decoding section that de-multiplexes program management tables and program data out of broadcast signals and decodes the de-multiplexed tables and data. Section 1202 is a program management table storage section for storing the list of the received program management tables. Section 1203 is a program data storage section that takes out the program identification data, the program storage area data, and the program guidance position data by using the program management table, and stores, in association with the program guidance position data, the program data identified by the program identification data in area designated by the program storage area data. Section 1204 is a storage medium in which the program management table and the program data are stored. Section 1205 is a position detection section that is able to obtain current position data which indicates the current position of the data reception apparatus by utilizing GPS signals which are transmitted by the Global Positioning System (GPS). Section 1206 is a map database section that holds map data covering all over Japan by means of a storage medium such as a DVD-ROM, CD-ROM, and so on. Section 1207 is a map data presentation section that acquires map data in accordance with the current position data and displays the acquired map data. Section 1208 is a program guidance position icon display section that displays an icon on the guided position on the map data, where the icon indicates the geographical position guided in the advertisement program in a case where the geographical position guided in the program exists on the presented map data by using program guidance position data which is associated with the stored program data. Section 1209 is a program guidance position icon selection section that accepts the manipulation by a user for selection of an icon to be displayed. Section 1210 is a program data presentation section that presents an advertisement program associated with program guidance position data corresponding to the selected icon. Section 1211 is a display device for presenting map information or the advertisement program to the user. Section 1212 is a remote control device that enables the user to perform manipulation for selecting a program guidance position icon.

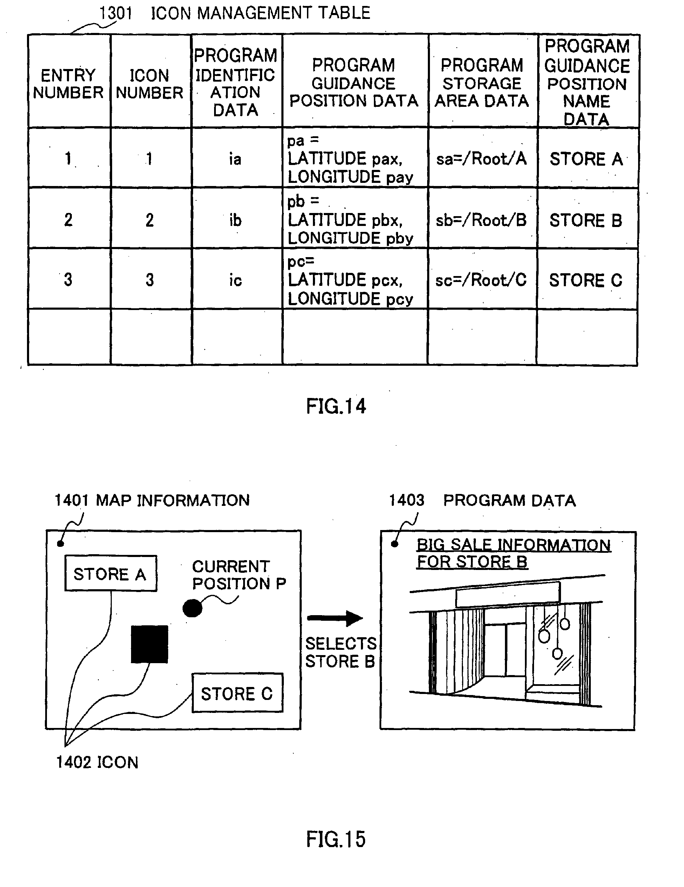

FIG. 14 is an icon management table which shows the relationships between icons indicated by program guidance position icon display section 1208 and a program management table, and this icon management table is held by the program guidance position icon display section and is used for the purpose of identification by program data presentation section 1210 of a program management table corresponding to the selected icon.

Reference numeral 1401 in FIG. 15 is map data which shows the vicinity of current user position P, whilst reference numeral 1402 shows icons each of which indicates a store, that is, store A, store B, or store C, which is located at position indicated respectively by positional information *ia, ib*, or *ic*, on the map data. Section 1403 illustrates one example of program data which is displayed upon selection of the icon for the store B. Herein, the system presents an advertisement program related to the big sale offered by the store B.

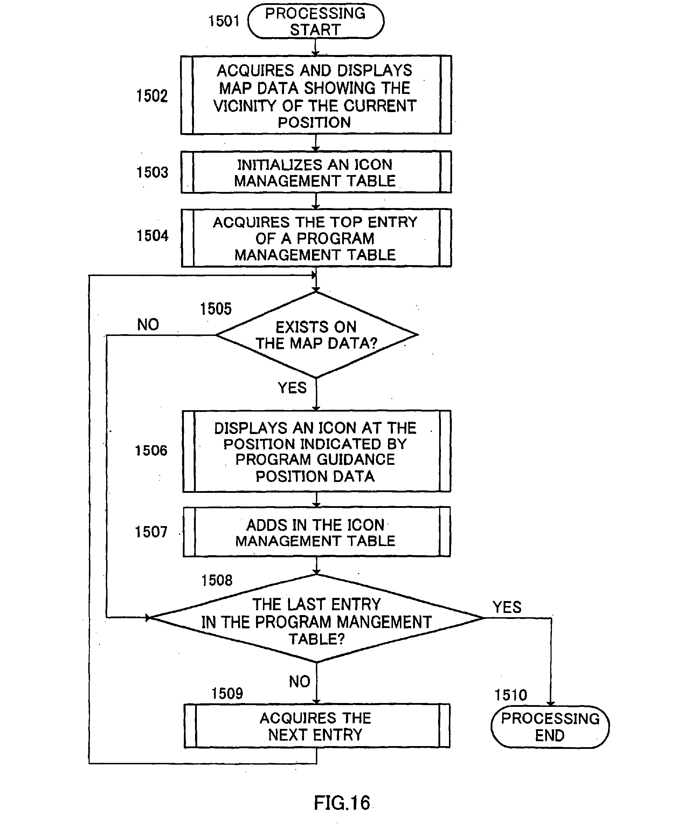

FIG. 16 is a flowchart illustrating the processing flow from the detection of current position data by position detection section 1205 through display of map data together with a program guidance position icon on display device 1211, and its operation is described below while referring to FIG. 14 and FIG. 15, too.

### Step 5-1) Processing Start (1501 in FIG. 16)

Step 5-2) Map data presentation section 1207 acquires map data showing the vicinity of current position from map database section 1206 based on current position data detected by position detection section 1205, and displays the acquired map data (1502 in FIG. 16).

Step 5-3) An icon management table held by program guidance position icon display section 1208 is initialized (Cleared) (1503 in FIG. 16).

Step 5-4) Program guidance position icon display section 1208 acquires the top entry in a program management table held by storage medium 1204 (1504 in FIG. 16).

Step 5-5) Program guidance position icon display section 1208 checks whether the position indicated by program guidance position data of the acquired entry is on the map data acquired in step 5-2) or not. In a case where the indicated position is not on the acquired map data, processing in step 5-7) is executed. In a case where the indicated position is on the acquired map data, processing in step 5-6) is executed (1505 in FIG. 16).

Step 5-6) Program guidance position icon display section 1208 displays an program guidance position icon at the position indicated by program guidance position data on the map data acquired in step 5-2 (1506 in FIG. 16), and holds the relationships between the displayed icon and the entry in the program management table (1507 in FIG. 16).

Step 5-7) Program guidance position icon display section 1208 checks whether the acquired entry is the last entry in the program management table or not. In a case where the acquired entry is the last entry, processing in step 5-9) is executed. In a case where the acquired entry is not the last entry, processing in step 5-8) is executed (1508 in FIG. 16) .

Step 5-8) Program guidance position icon display section 1208 acquires the next entry in the program management table, and executes processing in step 5-5) (1509 in FIG. 8).

### Step 5-9) Processing End (1510 in FIG. 16)

Through the above processing, map data 1401 together with program guidance position icon 1402 are displayed on display device 1211.

Next, the processing flow from the selection of any one of the program guidance position icon by a user through actual display of the corresponding program data on display device 1211 is described below.

Step 6-1) Upon issuance of a request for selection of any one icon out of the program guidance position icons displayed on map data by a user through manipulation of remote control device 1212, program guidance position icon selection section 1209 accepts the icon number.

Step 6-2) Program data presentation section 1210 searches for the entry corresponding to the icon number accepted in step 6-1) from the icon management table generated in the processing illustrated in FIG. 16, and from storage medium 1204, the section 1210 acquires program data stored in the area designated by program storage area data of the searched entry and displays the acquired program data.

Through the above processing, as illustrated in FIG. 15, the selection by a user of the icon for, for example, store B prompts display device 1211 to display program data B related to a big sale offered by the store B, which is located at position *ib*.

As described above, according to a data reception apparatus in an advertisement program presentation system of the present embodiment, a program guidance position icon display section displays an icon at the position guided by an advertisement program on map data, which produces an advantageous effect in that a user is able to visually recognize on the map data that a viewing access to an advertisement program which provides guidance on the specific position is available. Moreover, the selection of the icon produces further effect in that the user is provided with a quick viewing access to the advertisement program which provides guidance on the position.

### (Embodiment 4)

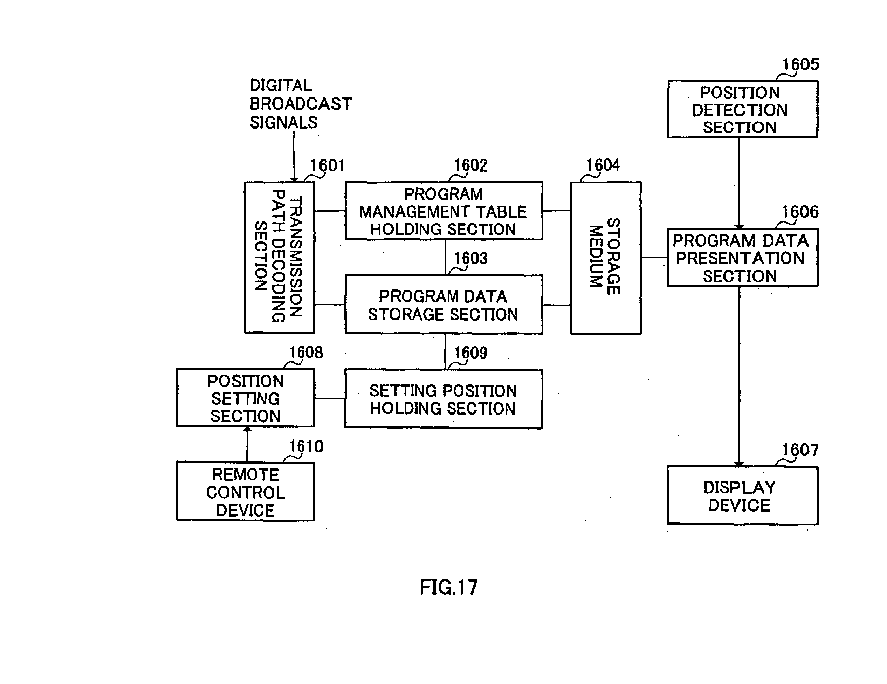

FIG. 17 is a diagram illustrating one example of the configuration of an advertisement program reception apparatus according to the present invention. In FIG. 17, section 1601 is a transmission path decoding section that de-multiplexes program management tables and program data out of broadcast signals and decodes the de-multiplexed tables and data. Section 1602 is a program management table storage section for storing the list of the received program management tables. Section 1603 is a program data storage section that takes out the program identification data, the program storage area data, and the program guidance position data by using the program management table, and stores, in association with the program guidance position data, the program data identified by the program identification data in area designated by the program storage area data. Section 1604 is a storage medium in which the program management table and the program data are stored. Section 1605 is a position detection section that is able to obtain current position data which indicates the current position of the data reception apparatus by utilizing GPS signals which are transmitted by the Global Positioning System (GPS). Section 1606 is a program data presentation section that presents a retrieved program data, where retrieval of a program data which is the closest to the current position is carried out by comparing the current position data with the program guidance position data in the program management table. Section 1607 is a display device for presenting the program data to a user. Section 1608 is a position setting section that accepts the setting manipulation of a specific geographical position. Section 1609 is a setting position holding section that holds the setting position which is set by position setting section 1608. Section 1610 is a remote control device that enables the user to perform manipulation for position settings.

Incidentally, in the data reception apparatus according to the present embodiment, the program data storage section 1603 has a function to secure a free space for storing received program data and to store the received program data even under a situation where there is not enough free space for storing the received program data and thus it is not possible to do so unless any measures are taken, where such securing of the free space is done by searching for the stored program data which provides guidance on the position farther from the set position than the position guided by the received program data based on the program guidance position data written in the program management table of the received program data and the program guidance position data associated with the stored program data, and by deleting the searched program data.

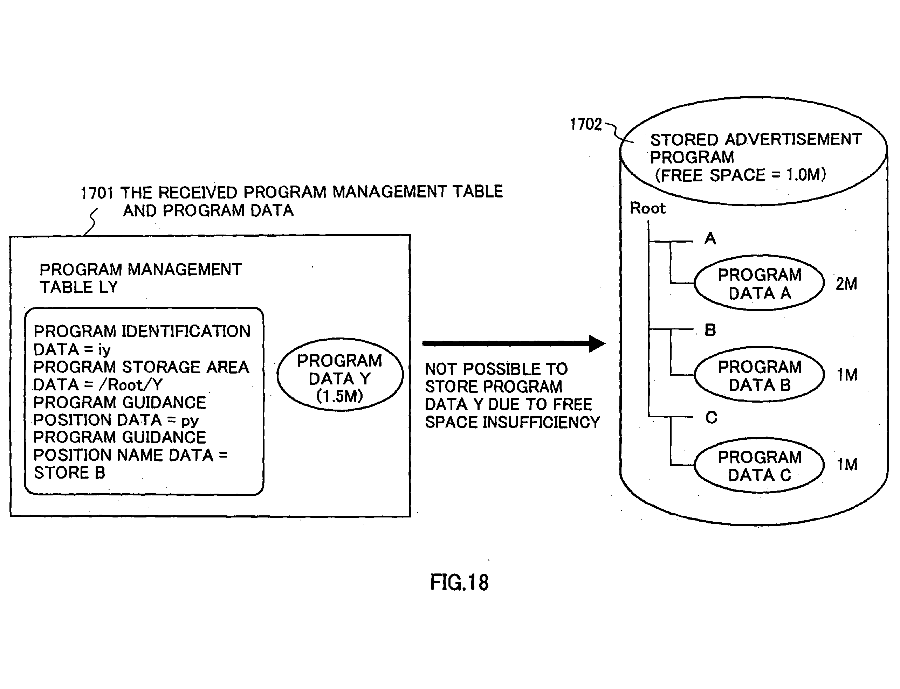

Reference numeral 1701 in FIG. 18 illustrates one example of a program data which is received by a data reception apparatus according to the present embodiment and is not yet but going to be stored now and of a program management table related to such program data, and the data size of received program data Y is assumed to be 1.5 mega bytes. Reference numeral 1702 in FIG. 18 illustrates the storing concept of the stored program data, and also illustrates a free space in storage medium 1604. Specifically, though a free space of at least 1.5 mega bytes is necessary for storing program data Y referenced with 1701, an available free space here is only 1.0 mega bytes as illustrated with reference numeral 1702, thus it is not possible to store the program data Y unless any measures are taken.

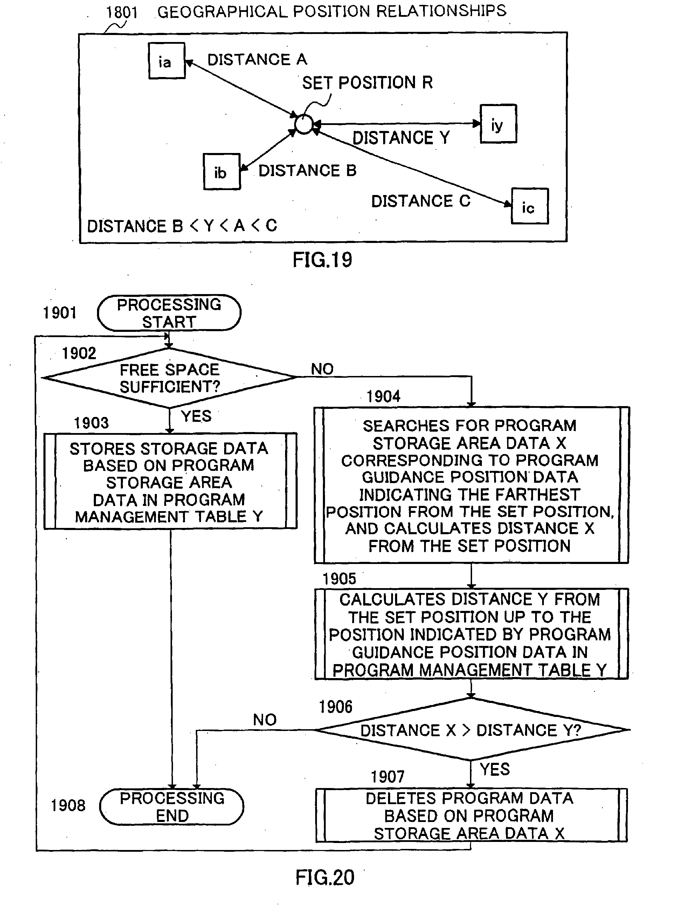

FIG. 19 is a diagram illustrating the positional relationships between set position R, which is preset by a user, geographical positions *pa, pb*, and *pc* guided by stored program data A, B, and C, and the geographical position *py* guided by program data Y, which is not yet but going to be stored now, and the figure shows, in this example, that position pc is the farthest from the set position R. Accordingly, the data reception apparatus according to the present embodiment enables the storing of program data Y, which provides guidance on the position which is closer to the set position than the position guided by the program data C, by deleting the program data C.

The basic processing flow of the data reception apparatus according to the present embodiment is the same as the processing flow which is illustrated in the flowchart of FIG. 6 and is explained in Embodiment 1, and the difference between the flows lies in the processing 508 of FIG. 6, that is, in the point that the present processing flow is characterized by dealing with a situation where there is not enough free space in storage medium 1604.

FIG. 20 is a flowchart illustrating such a processing flow, and its operation is described below while referring to FIG. 18 and FIG. 19, too.

### Step 7-1) Processing Start (1901 in FIG. 20)

Step 7-2) Program data storage section 1603 checks whether there is enough free space for storing received program data or not. In a case where there is enough space, processing in step 7-3) is executed. In a case where there is not enough space, processing in step 7-4) is executed (1902 in FIG. 20).

Step 7-3) Program data storage section 1603 stores received program data in the directory designated by program storage area data contained in the program management table related to the received program data, and executes processing in step 7-8) (1903 in FIG. 20).

Step 7-4) Program storage area data X, which corresponds to program guidance position data indicating the farthest position from set position R, which is preset by a user and is held by setting position holding section 1609, is searched from the program management table, and the program storage area data X together with the distance X indicating the distance from the set position R through the position indicated by the program guidance position data are held (1904 in FIG. 20).

Step 7-5) Distance Y, which is a distance between the position indicated by the program guidance position data contained in the program management table related to the received program data and the set position R, is calculated (1905 in FIG. 20) .

Step 7-6) The distance X is compared with the distance Y, and in a case where the distance X is longer than the distance Y, processing in step 7-8) is executed. In a case where the distance X is shorter than the distance Y, processing in step 7-7) is executed (1906 in FIG. 20).

Step 7-7) The program data stored in the directory designated by the program storage area data X is deleted, and processing in step 7-2) is executed (1907 in FIG. 20).

### Step 7-8) Processing End (1908 in FIG. 20)

Through the above processing, in the example of FIG. 19, program data C, which provides guidance on position pc, is deleted because the position pc is the farthest from the set position. Consequently, reference numeral 1702 in FIG. 18 has now a free space of 2 mega bytes, and therefore it is possible to store program data Y having the reception data size of 1.5 mega bytes.

As described above, according to the data reception apparatus in the advertisement program presentation system of the present embodiment, even in a situation where received program data is not able to be stored unless any measures are taken, through presetting of the user's home as the set position, the program data storage section is able to delete the stored advertisement program which provides guidance on the position which is farther from the user's home than the position guided in the received advertisement program and thereby to secure a free space and to store the advertisement program which provides guidance on the position which is closer to the user's home, which produces an advantageous effect of the ensured storage of an advertisement program having a greater necessity for the user. Alternatively, in the flowchart of FIG. 20, a program data which provides guidance on the position which is closer to the current position of the user may be stored by deleting the stored program which provides guidance on the position which is the farthest from the current position of the user instead of the set position, where processing for such deletion is done based on the current user position data detected by position detection section 1605 instead of the position set by the user.

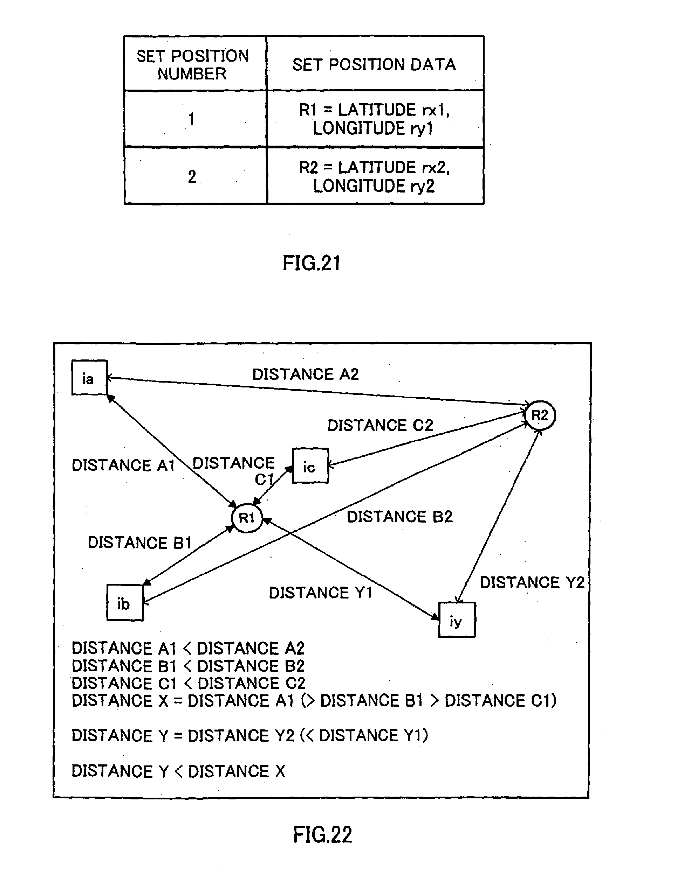

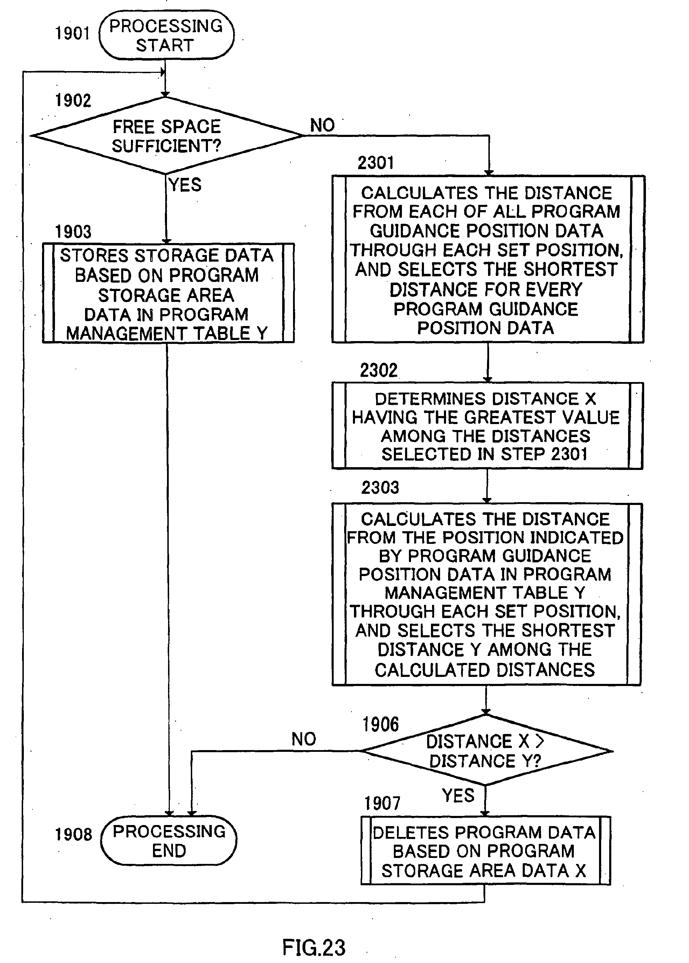

In addition, as shown in FIG. 21, it is also possible to set a plurality of positions as the set positions. FIG. 23 is a flowchart illustrating the processing flow for determining a program data to be stored in a case where a plurality of positions are set as the set positions, and its operation is described below while referring to FIG. 22, too. Incidentally, each of reference numerals 1901 - 1903 and 1906 - 1908 in FIG. 23 is the same processing as its corresponding processing in step 7 described above, and therefore its explanation is omitted here.

Step 8-1) Each distance from each of all stored program guidance position data through each of a plurality of set positions which are preset by a user and are held by setting position holding section 1609 is calculated, and the shortest distance is determined respectively for every stored program guidance position data (2301 in FIG. 23). For example, in FIG. 22, the distance from program guidance position data *ia* through set position R1 and the distance from the program guidance position data *ia* through set position R2 are, respectively, A1 and A2, where the distance A1 is taken for the program guidance position data *ia* because A1 is shorter than A2, that is, A1 < A2. In the same manner, distance B1 and distance C1 are respectively taken for program guidance position data *ib* and program guidance position data *ic*.

Step 8-2) Distance X which has the greatest value among the distances determined in step 8-1) described above is taken, that is, the longest distance among the distances each of which is calculated respectively from the nearest set position is taken (2302 in FIG. 23). For example, in FIG. 22, distance A is determined as distance X because the relationship among the distances is: distance C1 < distance B1 < distance A1.

Step 8-3) In the same manner as in step 8-1), distance Y, which is the shortest distance among distances between the position indicated by the program guidance position data contained in the program management table related to the received program data and each set position, is calculated (2303 in FIG. 23). For example, in FIG. 22, the distance from program guidance position data *iy* through set position R1 and the distance from the program guidance position data *iy* through set position R2 are, respectively, Y1 and Y2, where the distance Y2 is taken as distance Y because Y2 is shorter than Y1, that is, Y2 < Y1.

Through the above processing, in a situation where received program data is not able to be stored unless any measures are taken, even in a case where position settings are done for a plurality of positions such as, for example, the user's home and his/her friend's house (friends' houses), the program data storage section is able to delete the stored advertisement program which provides guidance on the position which is not only farther than the position guided in the received advertisement program but' also the farthest from a group of the set positions and thereby to secure a free space, which produces an advantageous effect of the ensured storage of an advertisement program having a greater necessity for the user.

Alternatively, in an advertisement program presentation system which is described in Embodiments 1 - 4 and is illustrated in the configuration diagrams of FIG. 2, FIG. 8, FIG. 13, and FIG. 17, its configuration may be physically separated into an apparatus which receives an advertisement program via a transmission path and stores the received advertisement program into a storage medium, and a device in which the storage medium is inserted for displaying the advertisement program stored therein, where such a configuration is achieved by separately comprising a storage medium of section 108 in FIG. 2, section 704 in FIG. 8, section 1204 in FIG. 13, or section 1604 in FIG. 17 in the form of a portable storage medium such as a memory card, which is a type of removable medium, sections 105 - 107 in FIG. 2, sections 701 - 703 in FIG. 8, sections 1201 - 1203 in FIG. 13, or sections 1601 - 1603 and sections 1608-1610 in FIG. 17 in the form of components in a digital broadcast reception apparatus which is fixedly installed in a user's home, and sections 109 - 111 in FIG. 2, sections 705 - 711 in FIG. 8, sections 1205 - 1212 in FIG. 13, or sections 1605 - 1607 in FIG. 17 in the form of components in a mobile phone or a car navigation system, which is used while moving together with the user.

### (Embodiment 5)

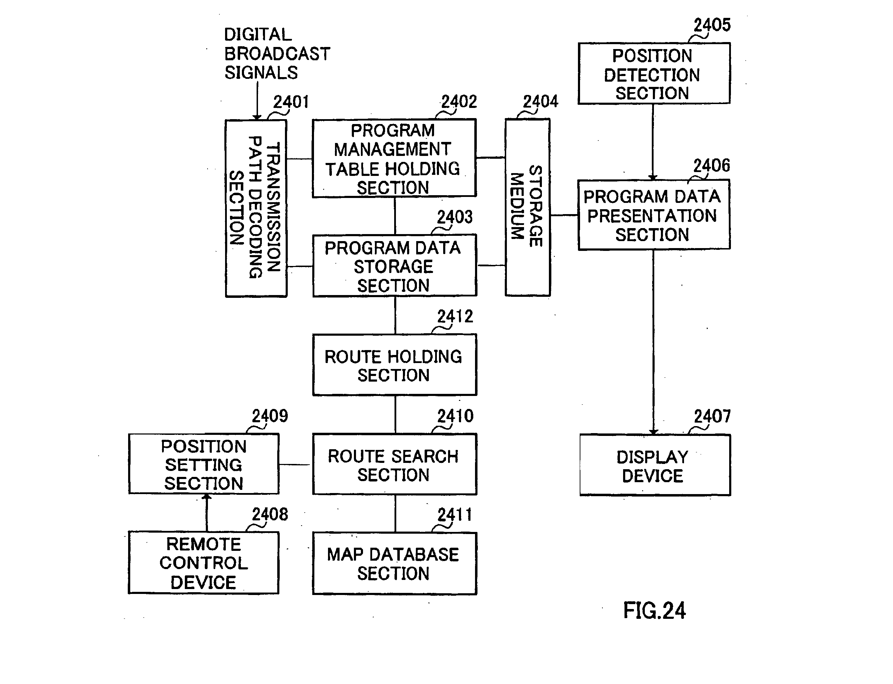

FIG. 24 is a diagram illustrating one example of the configuration of an advertisement program reception apparatus according to the present invention. In FIG. 24, section 2401 is a transmission path decoding section that de-multiplexes program management tables and program data out of broadcast signals and decodes the de-multiplexed tables and data. Section 2402 is a program management table storage section for storing the list of the received program management tables. Section 2403 is a program data storage section that takes out the program identification data, the program storage area data, and the program guidance position data by using the program management table, and stores, in association with the program guidance position data, the program data identified by the program identification data in area designated by the program storage area data. Section 2404 is a storage medium in which the program management table and the program data are stored. Section 2405 is a position detection section that is able to obtain current position data which indicates the current position of the data reception apparatus by utilizing GPS signals which are transmitted by the Global Positioning System (GPS). Section 2406 is a program data presentation section that presents a retrieved program data, where retrieval of a program data which is the closest to the current position is carried out by comparing the current position data with the program guidance position data in the program management table. Section 2407 is a display device for presenting the program data to a user. Section 2408 is a remote control device that enables the user to perform manipulation for position settings of an originating position and a terminating position. Section 2409 is a position setting section that accepts the setting manipulation of a specific geographical originating position and a specific geographical terminating position. Section 2410 is a route search section that finds a search route from the set originating position through the set terminating position by utilizing a map database. Section 2411 is a map database section that holds map data covering all over Japan by means of a storage medium such as a DVD-ROM, CD-ROM, and so on. Section 2412 is a route information holding section that holds the route information which covers from the originating point through the terminating point and is found by the route search section 2410.

Incidentally, in the data reception apparatus according to the present embodiment, the program data storage section 1603 has a function to secure a free space for storing received program data and to store the received program data even under a situation where there is not enough free space for storing the received program data and thus it is not possible to do so unless any measures are taken, where such securing of the free space is done by searching for the stored program data which provides guidance on the position farther from the route covering from the originating position through the terminating position than the position guided by the received program data based on the program guidance position data written in the program management table of the received program data and the program guidance position data associated with the stored program data, and by deleting the searched program data.

Reference numeral 1701 in FIG. 17 illustrates one example of a program data which is received by a data reception apparatus according to the present embodiment and is not yet but going to be stored now and of a program management table related to such program data, and the data size of received program data Y is assumed to be 1.5 mega bytes. Reference numeral 1702 in FIG. 17 illustrates the storing concept of the stored program data, and also illustrates a free space in storage medium 1604. Specifically, though a free space of at least 1.5 mega bytes is necessary for storing program data Y referenced with 1701, an available free space here is only 1.0 mega bytes as illustrated with reference numeral 1702, thus it is not possible to store the program data Y unless any measures are taken.

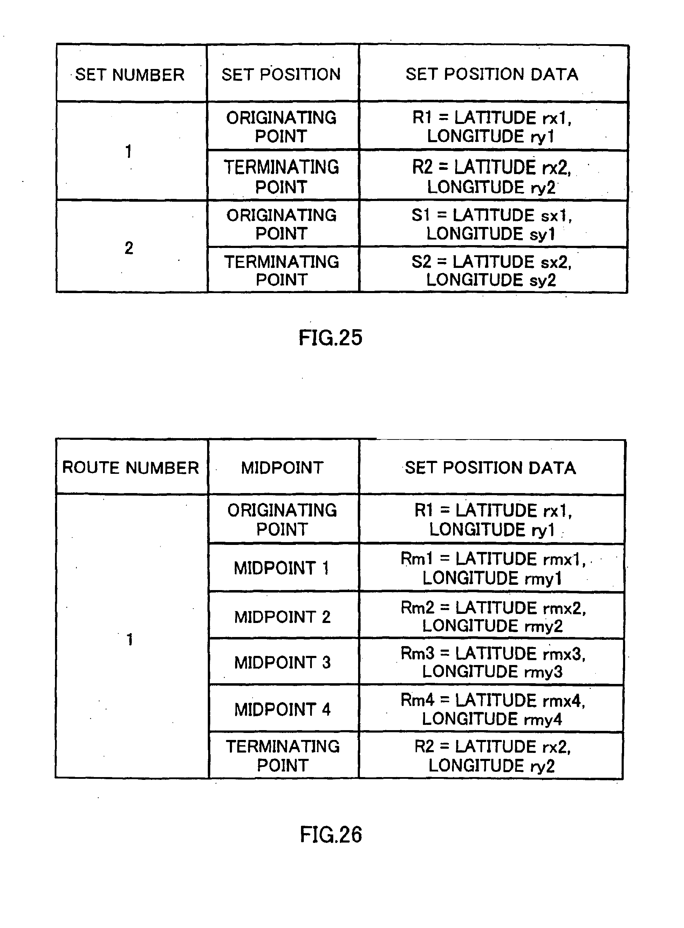

FIG. 25 shows the originating position and the terminating position both of which are preset by a user, and these are set at position setting section 2409 through use of remote control device 2408. In this example, settings of R1 - R2 and S1 - S2 are done for two sets of originating positions and terminating positions.

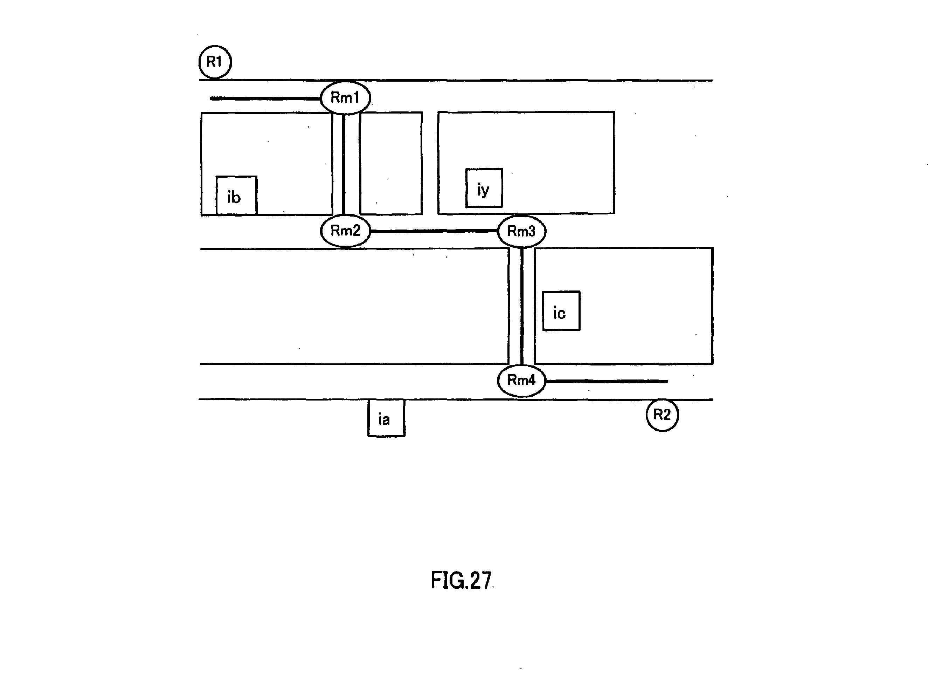

FIG. 26 illustrates a map route from the originating position through the terminating position set at the position setting section 2409 by route search section 2410, and as an illustration, a route from originating position R1 through terminating position R2 is shown here. As can be seen from the figure, a route from R1 through R2 goes, through midpoints Rm1 - Rm4. FIG. 27 illustrates route information in FIG. 26 indicated on a map database. As illustrated in FIG. 27, it can be seen that a user reaches from the originating position R1 through the terminating position R2, making a right or left turn at each of midpoints of Rm1, Rm2, Rm3, and Rm4 halfway on the route.

In addition, FIG. 27 also illustrates the positional relationships between the geographical positions *ia, ib, and ic* guided by the stored program data A, B, and C, respectively, and the geographical position *iy* guided by program data Y, which is not yet but going to be stored now. In this example, the position ib guided by program data B is the farthest from the searched route. Accordingly, the data reception apparatus according to the present embodiment enables the storing of program data Y, which provides guidance on the position which is closer to the route than the position guided by the program data B, by deleting the program data B.

The basic processing flow of the data reception apparatus according to the present embodiment is the same as the processing flow which is illustrated in the flowchart of FIG. 5 and is explained in Embodiment 1, and the difference between the flows lies in the processing 508 of FIG. 5, that is, in the point that the present processing flow is characterized by dealing with a situation where there is not enough free space in storage medium 1604.

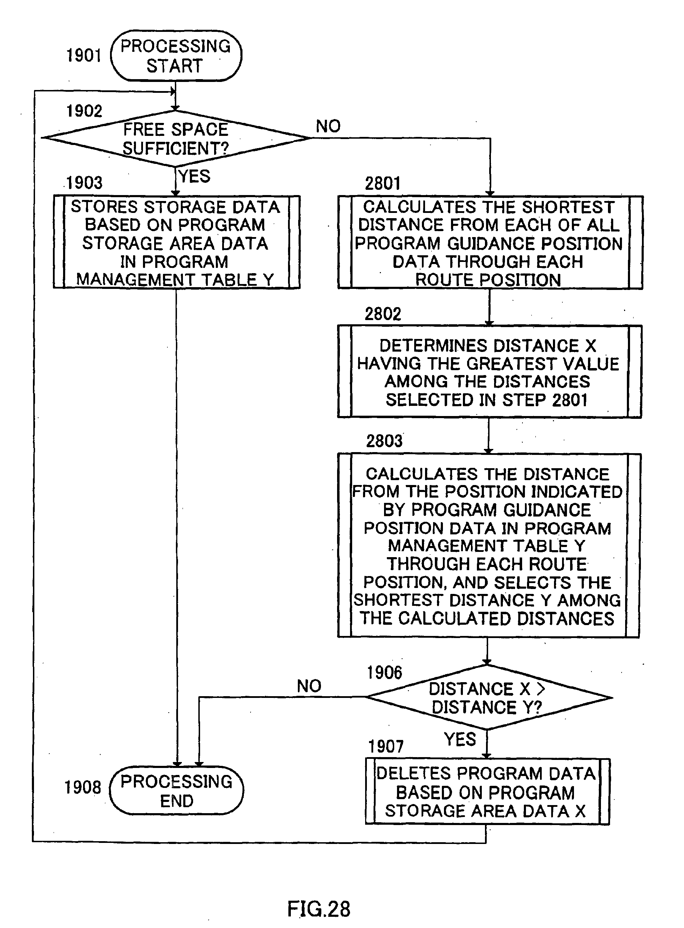

FIG. 28 is a flowchart illustrating such a processing flow, and its operation is described below while referring to FIG. 27, too. Incidentally, each of reference numerals 1901 - 1903 and 1906 - 1908 in FIG. 28 is the same processing as its corresponding processing in step 7 described above, and therefore its explanation is omitted here.

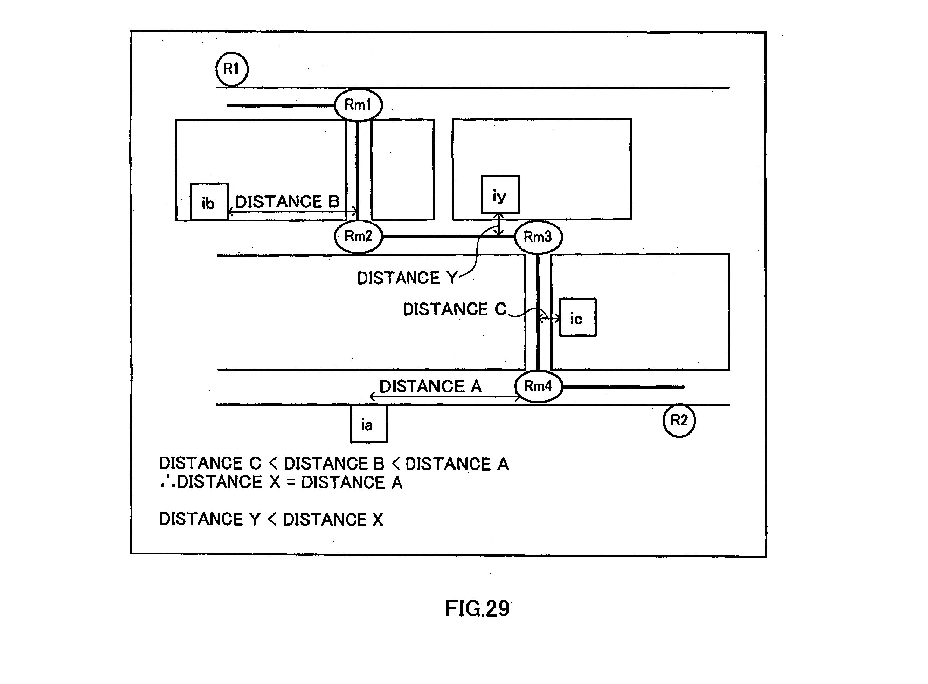

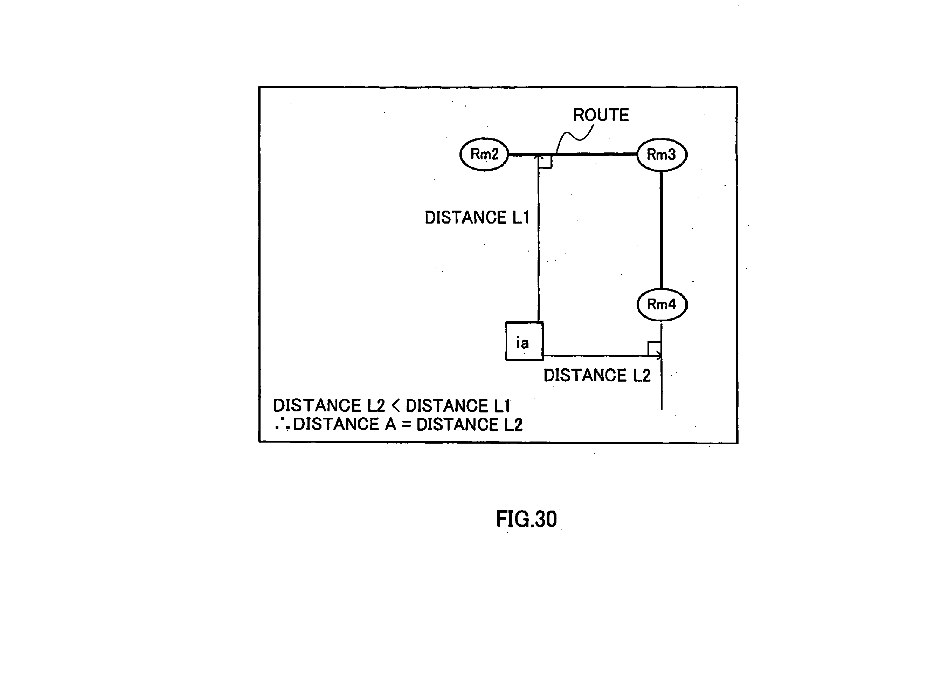

Step 9-1) The shortest distance from each of stored program guidance position data through the route held by search route holding section 2412 is determined (2801 in FIG. 28). As a method for such a determination of the shortest distance from the route up to each of the program guidance position data, as an example, there is a method illustrated in FIG. 30 in which an orthogonal line originating at each of the program guidance position data and forming a right angle with the route is drawn, and the length of the drawn line between them is calculated as the distance. In the illustration of FIG. 30, the length of orthogonal line L1 which originates at program guidance position data *ia* and forms a right angle with the straight line connecting midpoints Rm2 and Rm3, and the length of orthogonal line L2 which originates at program guidance position data *ia* and forms a right angle with the straight line connecting midpoints Rm3 and Rm4 are calculated respectively, and then the shortest distance A is determined to be L2 because L2 is shorter than L1, that is, L2 < L1. In this way, the shortest distance up to the route is determined for each of the program guidance position data. Through this determination, in FIG. 29, the shortest distances from program guidance position data *ia, ib, and ic* through route R1 - R2 are found as distance A, distance B, and distance C, respectively.

Step 9-2) Among the distances determined in step 9-1) described above, distance X, which has the greatest value, that is, the longest distance from the route is taken (2802 in FIG. 28). For example, in FIG. 29, distance A is determined as distance X because the relationship among the distances is: distance B < distance C < distance A.

Step 9-3) In the same manner as in step 9-1), distance Y, which is the shortest distance among distances between the position 'indicated by the program guidance position data contained in the program management table related to the received program data and the route, is determined (2303 in FIG. 28). For example, in FIG. 29, distance Y is determined, where the distance Y is the distance from the program guidance position data *iy* up to the part of the route R2 - R3.

Through the above processing, in the example of FIG. 29, program data B, which provides guidance on position *ib*, is deleted because the position *ib* is the farthest from the set route. Consequently, reference numeral 1702 in FIG. 17 has now a free space of 2 mega bytes, and therefore it is possible to store program data Y having the reception data size of 1.5 mega bytes.

As described above, according to the data reception apparatus in the advertisement program presentation system of the present embodiment, even in a situation where received program data is not able to be stored unless any measures are taken, through presetting of a frequently traveled route(s), the program data storage section 2403 is able to delete the stored advertisement program which provides guidance on the position which is farther from the frequently traveled route than the position guided in the received advertisement program and thereby to secure a free space and to store the advertisement program which provides guidance on the position which is closer to the frequently traveled route, which produces an advantageous effect of the ensured storage of an advertisement program having a greater necessity for the user.

### (Embodiment 6)

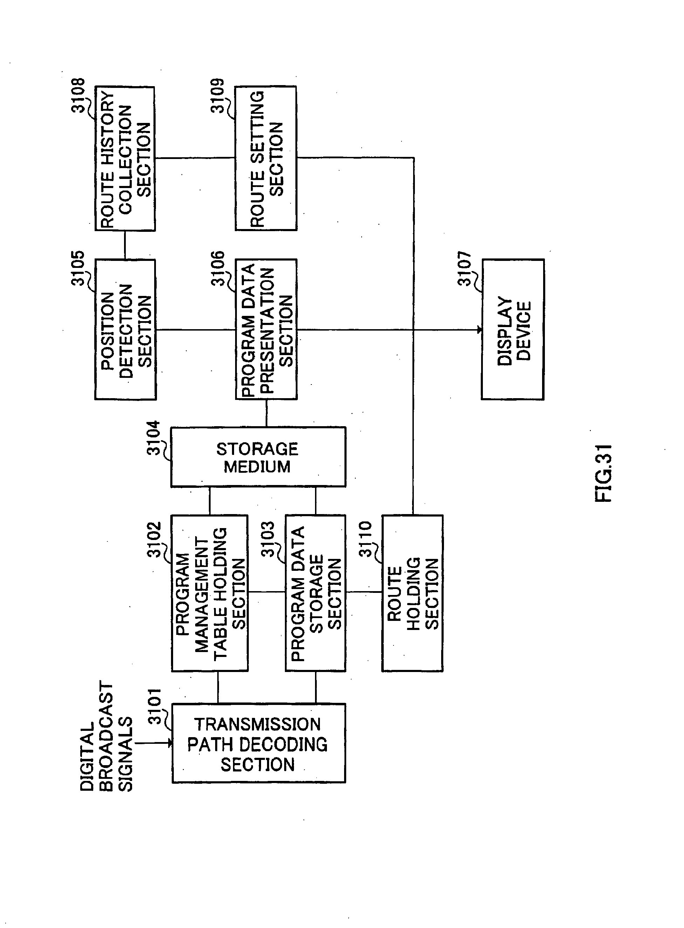

FIG. 31 is a diagram illustrating one example of the configuration of an advertisement program reception apparatus according to the present invention. In FIG. 31, section 3101 is a transmission path decoding section that de-multiplexes program management tables and program data out of broadcast signals and decodes the de-multiplexed tables and data. Section 3102 is a program management table storage section for storing the list of the received program management tables. Section 3103 is a program data storage section that takes out the program identification data, the program storage area data, and the program guidance position data by using the program management table, and stores, in association with the program guidance position data, the program data identified by the program identification data in area designated by the program storage area data. Section 3104 is a storage medium in which the program management table and the program data are stored. Section 3105 is a position detection section that is able to obtain current position data which indicates the current position of the data reception apparatus by utilizing GPS signals which are transmitted by the Global Positioning System (GPS) and is also able to learn the traveling direction of the data reception apparatus utilizing a gyroscopic compass. Section 3106 is a program data presentation section that presents a retrieved program data, where retrieval of a program data which is the closest to the current position is carried out by comparing the current position data with the program guidance position data in the program management table. Section 3107 is a display device for presenting the program data to a user. Section 3108 is a route history collection section that collects the history of the routes which a user has taken before based on positional information outputted from position detection section 3105. Section 3109 is a route setting section that determines route information out of the route history collected by the route history collection section. Section 3110 is a route information holding section that holds the route information covering from the originating point through the terminating point of the route set by route setting section 3109.

According to this embodiment, route history collection section 3108 detects the route(s) taken by the user before based on the positional information outputted from position detection section 3105, identifies the route and location which is the most frequently traveled by the user, and lets route holding section 3110 store the identified route and location. This allows the frequently traveled route to be set automatically without having to set the originating point and the terminating point of the route(s) which is frequently traveled by the user at position setting section 2409 through use of a remote control device by the user him/herself as illustrated in the preceding Embodiment 5 and thereby to store an advertisement program in accordance with the route information user, which produces an advantageous effect of the ensured storage of the advertisement program having a greater necessity for the user.

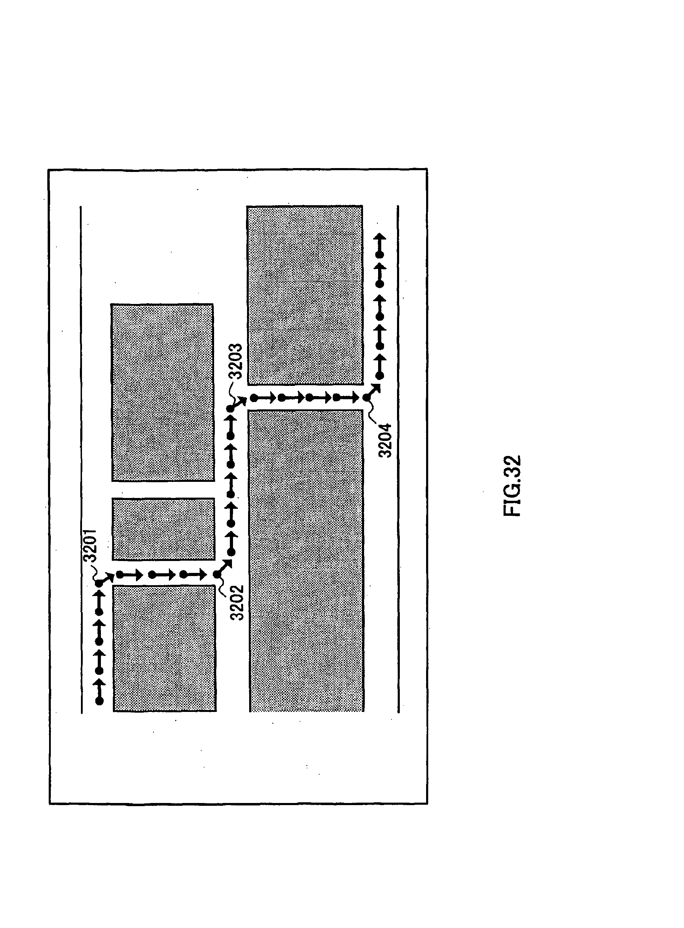

FIG. 32 is an illustration showing the history information of the route on which route history collection section 3108 moves. As illustrated in FIG. 32, route history collection section 3108 receives positional information containing, for example, latitudes and longitudes and the like outputted from GPS, and traveling direction information outputted from a gyroscopic compass, at certain intervals from position detection section 3105, and stores the received information as history information. Route history collection section 3108 generates route information out of the stored history information. The route information is represented by the originating point, midpoints, and the terminating point. The originating point serves as the first positional information of the history, whilst the terminating point serves as the last positional information thereof. Midpoints are represented as points on each of which either a right turn or a left turn is made, which indicates that the traveling direction is changed there. In driving a car, minor meandering is normal and should be neglected, and therefore it is judged that the car made either a right turn or a left turn only if there was a change in its direction exceeding a certain angle, that is, 45 degrees or greater, and such point of the change in direction is taken as a midpoint. For example, in FIG. 32, points 3201, 3202, 3203, and 3204 meet such a definition. In this way, it is possible to generate route information in a similar format as in FIG. 26 of the preceding Embodiment 5 by determining the originating point, midpoints, and the terminating point. In addition, route history collection section 3108 manages a use frequency ranking for traveled routes.

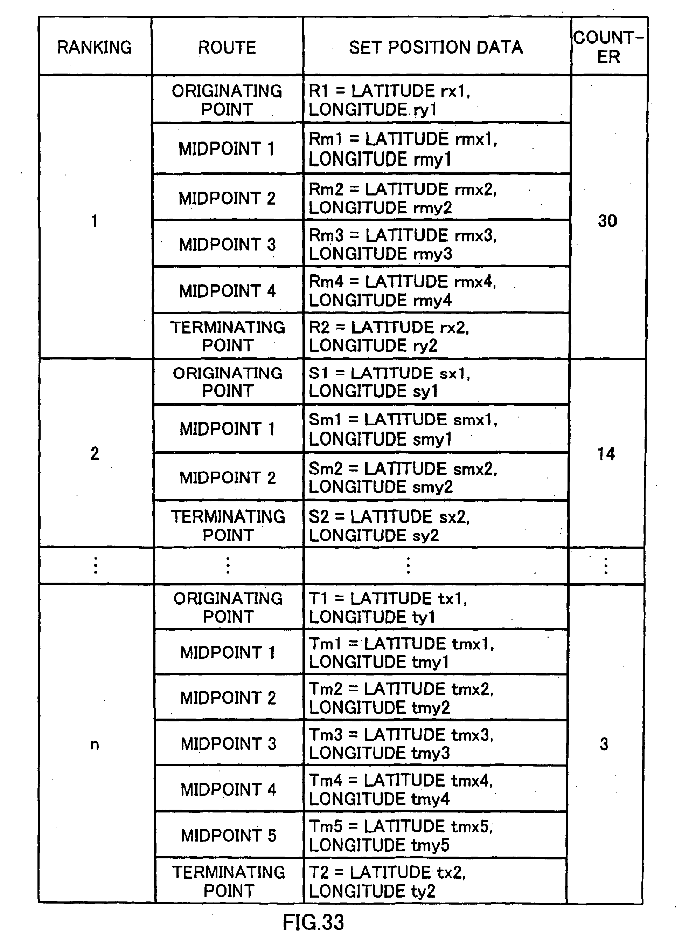

FIG. 33 illustrates the use frequency ranking of routes. As illustrated in FIG. 33, the use frequency ranking is used for managing the routes in the order of how frequently each route is traveled, where such a management is targeted on route information gathered by route history collection section 3108. Route history collection section 3108 checks whether the gathered route information matches with any route which has been taken before or not, and in a case whether it matches with the route traveled before, the counter on the use frequency ranking corresponding to the matching route information is incremented by one, and a ranking is generated by sorting the entries in decreasing order of the counter number.

Route setting section 3109 sets a route(s) at route holding section 3110 based on the route information generated by the route history collection section 3108 and the use frequency ranking of routes. Route setting section 3109 acquires the use frequency ranking of the routes from route history collection section 3108 and sets, for example, top 3 rank routes at route holding section 3110.

As described above, even in a situation where received program data is not able to be stored due to insufficient capacity unless any measures are taken, through program data storage section 3103's execution of the flow processing in FIG. 28 described in the preceding Embodiment 5 based on the route information set at route holding section 3110, the program data storage section 3103 is able to delete the stored advertisement program which provides guidance on the position which is farther from the frequently traveled route than the position guided in the received advertisement program and thereby to secure a free space and to store the advertisement program which provides guidance on the position which is closer to the frequently traveled route, which produces an advantageous effect of the ensured storage of an advertisement program having a greater necessity for the user.

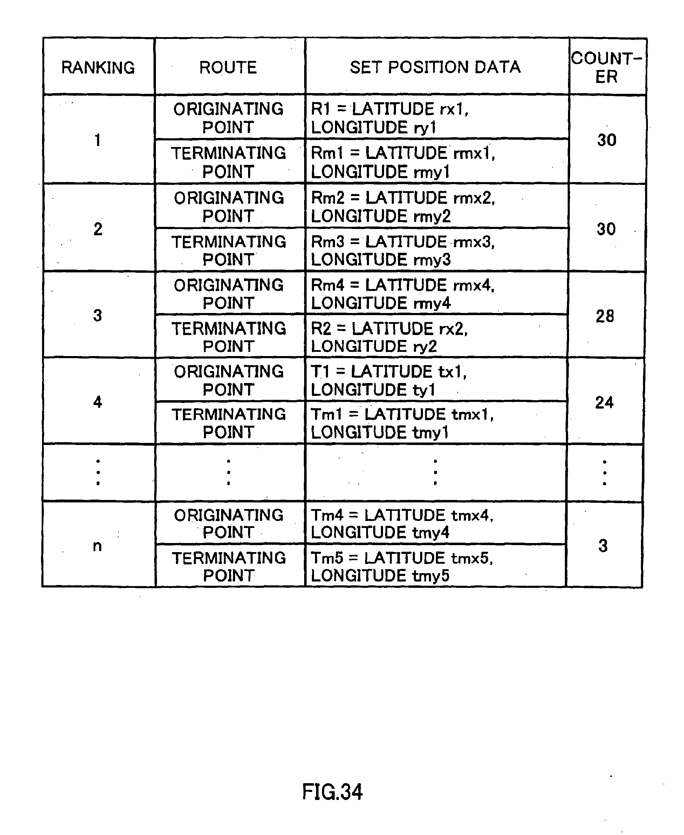

Alternatively, each of route information ranked by the route history collection section 3108 may be consisted of a single portion of the entire route between two points, which is subjected to management and ranking, rather than a route containing a plurality of midpoints, in other words, a plurality of portions, as illustrated in FIG. 26. An example of the use frequency ranking under such a constitution is illustrated in FIG. 34.

Alternatively, routes set at route holding section 3110 by the route setting section 3109 may be routes traveled last time rather than top-ranking routes.

As described above, according to the present invention, because a program management table control section in a data transmission apparatus generates and manages a program management table which contains program storage area data for designating where the advertisement program is stored in the data reception apparatus and also contains program guidance position data of the location guided in the program, and the table is transmitted to the data reception side, there is an advantageous effect in that a program data storage section in the data reception apparatus is, in accordance with the program management table, able to store the advertisement program easily and to manage the advertisement program easily by associating the program with the program guidance position data.

In addition, according to the present invention, based on the current position detected by a position detection section, for example, program data which provides guidance on the closest position from the current position is searched by using program guidance position data which is associated with the stored program data, which produces an advantageous effect in that a program data presentation section is able to present a suitable advertisement program in accordance with the current position of a user.

Furthermore, according to the present invention, program guidance position name list presentation section presents a list of program guidance position name data sorted in the order of closeness to the current position of a user, which produces an advantageous effect in that the user is able to find a suitable advertisement program easily in accordance with the current position. Moreover, it produces further effect in that the selection of any one from the list of this program guidance position name data provides the user with a quick viewing access to the advertisement program which provides guidance on the position indicated by the program guidance position name data.

Still moreover, according to the present invention, a program guidance position icon display section displays an icon at the position guided by an advertisement program on map data, which produces an advantageous effect in that a user is able to visually recognize on the map data that a viewing access to an advertisement program which provides guidance on the specific position is available. Moreover, the selection of the icon produces further effect in that the user is provided with a quick viewing access to the advertisement program which provides guidance on the position.

Still furthermore, according to the present invention, for example, even in a situation where received program data is not able to be stored unless any measures are taken, through presetting of the user' s home as the set position, the program data storage section is able to delete the stored advertisement program which provides guidance on the position which is farther from the user's home than the position guided in the received advertisement program and thereby to secure a free space and to store the advertisement program which provides guidance on the position which is closer to the user's home, which produces an advantageous effect of the ensured storage of an advertisement program having a greater necessity for the user.

This specification is based on the Japanese Patent Application No. 2002-026284 filed on February 4, 2002, entire content of which is expressly incorporated by reference herein.

## Claims

1. A data reception apparatus used in an advertisement program presentation system which uses digital broadcast signals, comprising:
a decoding section that de-multiplexes advertisement program data and positional data which indicates a geographical position of a location guided in an advertisement program out of received digital broadcast signals; and
a storing section that stores the decoded advertisement program data in association with the decoded positional data;
wherein said storing section determines advertisement program data to be deleted among the stored advertisement program data based on the positional data corresponding to the stored advertisement program data in a situation where there is not enough free space for storing the decoded advertisement program data and thus it is not possible to store the decoded advertisement program data.

2. The data reception apparatus according to claim 1, further comprising:
a setting section that accepts setting manipulation of a specific geographical position;
wherein said storing section determines advertisement program data corresponding to positional data indicating a position which is the farthest from a set position as the advertisement program data to be deleted.

3. The data reception apparatus according to claim 1, further comprising:
a detecting section that detects a current geographical position of the data reception apparatus;
wherein said storing section determines advertisement program data corresponding to positional data indicating a position which is the farthest from the detected current position as the advertisement program data to be deleted.

4. The data reception apparatus according to claim 1, further comprising:
a setting section that accepts setting manipulation of a specific geographical originating position and a specific geographical terminating position; and
a search section that searches for a route from the set originating position through the set terminating position on a map;
wherein said storing section determines advertisement program data corresponding to positional data indicating a position which is the farthest from the searched route as the advertisement program data to be deleted.

5. The data reception apparatus according to claim 1, further comprising:
an identifying section that identifies the most frequently traveled route among a plurality of routes on a map traveled before by the data reception apparatus;
wherein said storing section determines advertisement program data corresponding to positional data indicating a position which is the farthest from the identified route as the advertisement program data to be deleted.

6. The data reception apparatus according to claim 1, further comprising:
an identifying section that identifies a route on a map traveled by the data reception apparatus last time;
wherein said storing section determines advertisement program data corresponding to positional data indicating a position which is the farthest from the identified route as the advertisement program data to be deleted.
